(19) Europäisches Patentamt
European Patent Office
Office européen des brevets

(11) EP 4 574 897 A1

(12) EUROPEAN PATENT APPLICATION

(43) Date of publication:
**25.06.2025 Bulletin 2025/26**

(21) Application number: **24220471.7**

(22) Date of filing: **17.12.2024**

(51) International Patent Classification (IPC):
***C08L 33/08*** *(2006.01)*

(52) Cooperative Patent Classification (CPC):
(C-Sets available)
**C08L 33/08** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.12.2023 US 202363614440 P**
**22.10.2024 US 202418922596**

(71) Applicant: **Infineum International Limited**
**Abingdon, Oxfordshire OX13 6BB (GB)**

(72) Inventors:
- **Lewis, Ronald**
**Linden, 07036 (US)**
- **Galbraith, Ewan**
**Linden, 07036 (US)**
- **Nga, Nguyen**
**Linden, 07036 (US)**

(74) Representative: **Hart, Richard Joseph et al**
**Infineum UK Ltd.**
**Milton Hill Business & Technology Centre**
**Milton Hill**
**Abingdon, Oxfordshire OX13 6BD (GB)**

(54) **CROSSLINKED POLYACRYLATES AND METHODS OF MAKING THE SAME**

(57) Disclosed are crosslinked polyacrylates and methods of making the crosslinked polyacrylates, the composition including at least two polyacrylates including one or more monofunctional acrylic monomer derived units, the at least two polyacrylates bound to one another by at least one polyolefinic crosslinker, wherein the polyolefinic crosslinker has an Mn value of greater than 1000 g/mole, and wherein the crosslinked polyacrylates have an Mw of at least 30,000 g/mole.

EP 4 574 897 A1

(52) Cooperative Patent Classification (CPC): (Cont.)

C-Sets
**C08F 290/048, C08F 220/1804, C08F 220/1812, C08F 220/1807;**
**C08F 290/048, C08F 220/1806;**
**C08F 290/048, C08F 220/1812, C08F 220/06;**
**C08F 290/048, C08F 220/1812, C08F 220/14;**
**C08F 290/048, C08F 220/1812, C08F 220/1804;**
**C08F 290/048, C08F 220/1812, C08F 220/1807, C08F 220/06;**
**C08F 290/048, C08F 220/1812, C08F 220/20**

## Description

## FIELD OF THE INVENTION

This disclosure relates to flowable crosslinked polyacrylates comprising polyolefinic crosslinkers and methods of making such materials.

## BACKGROUND OF THE INVENTION

Polyacrylates find many applications in coating materials, binders, flow improvers, and adhesives. The usefulness of such polymers is driven by their inherent polar nature as well as the diversity of monomers and process conditions that can be used to make them, resulting in a high degree of flexibility in their commercial application. One important class of polyacrylates are those that are crosslinked, thus offering an even greater array of processing flexibility and end use applications.

Common types of crosslinkable polyacrylates are those that contain a mixture of monofunctional and multifunctional monomers which are then cured via a secondary process such as by heating, UV radiation, or other radical-generating means distinct from the process to form the polyacrylate. Such compositions are disclosed in, for example, US 2013/0273362A1, US 8110280, US 7393901, and US 2006/0116476A1. However, a crosslinked copolymer composition with no multifunctional crosslinker is disclosed in, for example, US 10947423 for use in oil resistant adhesives.

Also known are crosslinkable polyacrylates with monofunctional acrylic monomers and monomers with crosslinkable functional groups that are capable of forming covalent bonds with a second crosslinkable functional group of an adjacent functional group when curing conditions (e.g., pressure) are applied, such as in US 2021/0198533A1, disclosing thiol-ene crosslinking and amine-acetoacetoxy crosslinking. Further, crosslinkable polyacrylates containing a mixture of a solute polymer, monomers, and crosslinker(s) which are then cured (e.g., with UV-radiation or pressure) are disclosed in, for example, US 10626300 and US 9803114.

Also known are crosslinkable polyacrylates wherein the crosslinking reaction is between a hydroxyl group from the polymers or monomers and isocyanate as crosslinker, such as disclosed in JP 6986666B2 and JP 6338915B2. The use of other small molecule multifunctional acrylates are disclosed in, for example, US 2021/0130521A1; US 9447309; and US 9822286; Small molecule multifunctional monomer are also disclosed in US 2017/0037282A1. In US 9475967 the monomer contains C6 to C20 olefin sidechains as crosslinkable units; where in US 2014/0243493A1 the crosslinker is polyethylene glycol dimethacrylate. Finally, US 9359528B2 and US 9290682 generically describe crosslinkers as multifunctional acrylates.

There is still a need for new solutions providing useful crosslinkable polyacrylates. The inventors here have developed a crosslinked polymer derived from monofunctional acrylic monomers and well-defined hydrophobic polymeric crosslinkers having a particularly narrow polydispersity. As the crosslinked polyacrylates can be made under typical radical reaction conditions (without secondary processes such as UV radiation or pressure, etc.), the impact of different polymerization conditions on the properties of crosslinked products is further explored as a means to achieve desirable polymer properties, especially desirable shear viscosity properties.

## SUMMARY OF THE INVENTION

This disclosure relates to crosslinked polyacrylates comprising (or consisting of, or consisting essentially of) the reaction product of one or more monofunctional acrylic monomers; and one or more polyolefinic crosslinkers having at least two reactive dienes and an Mn value of greater than 1000 g/mole; wherein the crosslinked polyacrylates have an Mw of at least 30,000 g/mole.

This disclosure also relates to crosslinked polyacrylates comprising (or consisting of, or consisting essentially of) at least two polyacrylates comprising one or more monofunctional acrylic monomer derived units, the at least two polyacrylates bound to one another by at least one polyolefinic crosslinker, wherein the at least one polyolefinic crosslinker has an Mn value of greater than 1000 g/mole, and wherein the crosslinked polyacrylates have an Mw of at least 30,000 g/mole.

In any embodiment, the polyolefinic crosslinker(s) are selected from the group consisting of the structures represented by:

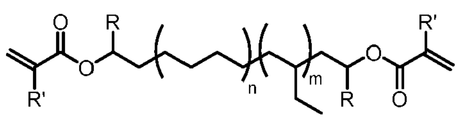

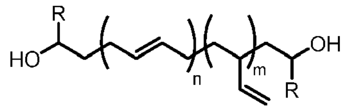

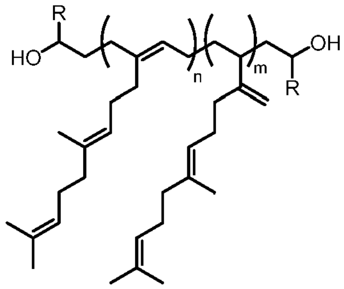

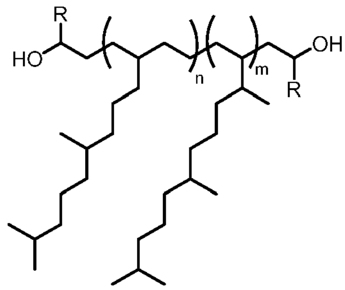

and combinations thereof, wherein n and m are integers within a range from 0 to 40, wherein n+m ≥ 1, and wherein any one or more of the hydroxyl groups in the structures may be esterified to form the acrylate analogue, and wherein R is a hydrocarbon radical and R' is hydrogen or methyl.

In any embodiment, the one or more monofunctional acrylic monomers are selected from structures represented by the formula $CH_2$=CR-C(O)X-R', wherein R is hydrogen or methyl, X independently is oxygen or a group of the formula NR", where R' is hydrogen, or a linear, branched, or cyclic hydrocarbon radical, and R" is hydrogen or a linear, branched, or cyclic hydrocarbon radical.

Also, in any embodiment the polyacrylate has a polydispersity (PDI) of 2.4 or less.

Also, in any embodiment the crosslinked polyacrylates have an Mn of at least 20,000 g/mole.

Also, in any embodiment the crosslinked polyacrylates have an Mw of at least 50,000 g/mole.

Also, in any embodiment the crosslinked polyacrylates have an Mz of at least 50,000 g/mole.

Also, in any embodiment the crosslinked polyacrylates have a PDI within a range from 2.5 to 20.

This disclosure also relates to a method of forming crosslinked polyacrylates having an Mw of at least 30,000 g/mole comprising (or consisting of, or consisting essentially of) combining one or more monofunctional acrylic monomers with a polyolefinic crosslinker having at least two reactive dienes, wherein: (a) the polyolefinic crosslinker is combined over time; (b) both are combined simultaneously; (c) the monofunctional acrylic monomers are combined over time, or (d) both the monofunctional acrylic monomers and the polyolefinic crosslinker are combined over time with one another.

## DESCRIPTION OF THE DRAWINGS

FIG. 1 is a representative Williams-Landel-Ferry model plot used to perform time-temperature superposition where G' and G" is plotted as a function of angular frequency;
FIG. 2 is a representative plot of Horizontal shift factors where aT values are plotted as a function of temperature;
FIG. 3 is a bar chart of bulk shear thinning performance (cross exponents) of certain examples described herein at equal molar ratios and using only LMA as the monofunctional acrylic monomer (Mz values are displayed above each bar);
FIG. 4 is a bar chart of bulk shear thinning performance (cross exponents) of certain examples described at equal molar ratios and using a consistent composition of monofunctional acrylic monomers (Mz values are displayed above each bar); and
FIG. 5 is a bar chart demonstrating that for examples using the same crosslinker type and amount showing the molecular weight effect on the cross exponent as differing monofunctional acrylic monomers are used (Mz values are displayed above each bar).

## DETAILED DESCRIPTION OF THE INVENTION

For purposes of this specification and all claims to this invention, the following terms and expressions, if and when used, have the meanings ascribed below.

As used herein, the term "monomer(s)" or "monofunctional acrylic monomer(s)" refers to structures represented by the formula $CH_2$=CR-C(O)X-R', wherein R is hydrogen or methyl, X independently is oxygen or a group of the formula NR", R' is hydrogen, or a linear, branched, or cyclic hydrocarbon radical, and R" is hydrogen or a linear, branched, or cyclic hydrocarbon radical. In any embodiment, the linear hydrocarbon radical is a C1 or C10 or C21 to C50, or C80, or C100, or

C200, or C300, or C400 hydrocarbon radical; and in any embodiment, the branched hydrocarbon radical is a C4 or C10 or C21 to C40, or C60, or C80, or C100, or C200, or C300, or C400 hydrocarbon radical; and in any embodiment the cyclic hydrocarbon is a C5 or C10 to C20, or C40, or C60, or C80 hydrocarbon radical wherein the cyclic hydrocarbon may be a multicyclic hydrocarbon radical.

As used herein, the term "polyacrylates" includes acrylates, methacrylates, and other alkyl (alk)acrylates comprising monomer derived units as represented by the formula above: $CH_2$=CR-C(O)X-R' above, wherein R is hydrogen or methyl, X independently is oxygen or a group of the formula NR", R' is hydrogen, or a linear, branched, or cyclic hydrocarbon radical, and R" is hydrogen or a linear, branched, or cyclic hydrocarbon radical.

As used herein, the term "initiator" refers to a chemical compound that generates radicals upon heating and is useful in effecting the formation of chemical bonding between monomers and/or one or more crosslinkers.

As used herein, the phrase "reactive diene" means a diene that is capable of forming bonds with other molecules under the same conditions as those used to form the polyacrylates described herein.

As used herein, in the tables and throughout the specification and claims, the Polydispersity Index or "PDI" is equivalent to the ratio of Mw/Mn.

As used herein, all Mn, Mw, and Mz values used and referenced herein are calculated from gel permeation chromatography techniques as described below (GPC).

As used herein, the term "crosslinker" refers to a chemical compound that contains at least two radically-reactive units, for example methacrylates, acrylates, and/or dienes. Most preferably the crosslinkers described herein are polyolefinic crosslinkers.

As used herein, the term "polyolefinic" refers to a polymer made up of monomers that are one or more type of an olefin. An "olefin" is a linear, branched, or cyclic compound of carbon and hydrogen having at least one double bond. Most preferably the polyolefinic polymers described herein comprise olefin-derived monomers selected from C2 to C10, or C15, or C20, or C25, or C30, or C50 olefins. For purposes of this specification and the claims appended thereto, when a polymer or copolymer is referred to as comprising an olefin ("olefinic"), the olefin present in such polymer or copolymer is the polymerized form of the olefin. For example, when a copolymer is said to have an "isoprene" content of 55 wt% to 95 wt%, it is understood that the monomer derived unit (or "monomer unit") in the copolymer is derived from isoprene in the polymerization reaction and said monomer units are present at 55 wt% to 95 wt%, based upon the weight of the copolymer. A "polymer" has two or more of the same or different monomer units. A "homopolymer" is a polymer having monomer units that are the same; a "copolymer" is a polymer having two or more monomer units that are different from each other. "Different" as used to refer to monomer units indicates that the monomer units differ from each other by at least one atom or are different isomerically, thus, for example, a polyethylene homopolymer is derived from C2 olefins, and an ethylene-propylene copolymer is derived from C2 olefins and C3 olefins.

As used herein, when a polymer is referred to as a "partially or fully saturated polymer", or otherwise "partially or fully hydrogenated", such polymer or copolymer are the polymerized form of the olefin(s) and the polymer has been partially or fully saturated (such as by hydrogenation) after polymerization of the monomers. In any embodiment, a fully saturated or fully hydrogenated polymer may contain a residual amount of unsaturation, such as less than 0.1 wt% of the polymer may have unsaturation.

As used herein, the term "hydrocarbon" means a compound of hydrogen and carbon atoms, such as ten carbon atoms ("C10"), one hundred carbon atoms ("C100"), etc. A "heteroatom" is an atom other than carbon or hydrogen, and hydrocarbons may also contain one or more heteroatoms or heteroatom-containing groups such as oxygen (O), hydroxyl (OH), carboxyl (O=C), halo, especially chloro and fluoro, amino, alkoxyl, mercapto, alkylmercapto, nitro, nitroso, sulfoxy, etc. A "hydrocarbyl" is a hydrocarbon radical, that is, it is deficient in one or more hydrogen and/or carbon atoms such that it is a group chemically bound to another compound or group and is otherwise the same as a hydrocarbon. The term "hydrocarbyl" includes "alkyl", "alkenyl", "alkynyl", and "aryl" as defined herein.

As used herein, the term "reagent" refers to the chemical compounds that are combined with one another to form the polyacrylates and/or the crosslinked polyacrylates. For instance, at a minimum the reagents needed to form the crosslinked polyacrylates are the polyolefinic crosslinker and the monofunctional acrylic monomer that form the polyacrylate.

As used herein, the phrase "over time" means that the combining of reagent(s) is taking place gradually, either continuously or fractionally, from a beginning time until a final time when all the reagent(s) are combined as specified. For example, four one-quarter portions of reagent A added to another reagent in 20 minute increments until all reagent A is combined over a time of 60 minutes; or reagent A is added to another reagent gradually and metered continuously over a time of 60 minutes.

As used herein, the term "fractional" and "fractionally" refers to reagents added in portions over time until all the reagents are combined with one another; for example, four one-quarter portions of reagent A added to another reagent in 20 minute increments until all reagent A is combined after 60 minutes, thus reagent A is combined fractionally.

As used herein, the term "simultaneous" refers to the addition of two or more reagents with one another over a very short period of time, such as less than 1%, or 0.1% of the total time the reagents are allowed to react with one another.

It is understood that any upper and lower quantity, range, and ratio limits set forth herein may be independently combined.

Also, it is understood that the preferred features of each aspect of the present disclosure are regarded as preferred features of every other aspect of the present disclosure. Accordingly, preferred and more preferred features of one aspect of the present disclosure may be independently combined with other preferred and/or more preferred features of the same aspect or different aspects of the present disclosure.

The present invention relates to a crosslinked polyacrylate wherein the crosslinker is a polymeric linear or branched hydrophobic molecule having reactive dienes (e.g., a dimethacrylate) such that it can form bonds with two or more polyacrylates or other diene-containing molecule. Surprisingly, incorporation of such a polymeric crosslinker, especially one derived from narrow PDI hydrogenated polybutadiene and/or polyfarnesene, enables access to polymer products with improved bulk shear thinning compared against a small molecule dimethacrylate crosslinker (e.g., 1,6-hexanediol dimethacrylate, or "1,6-hexyl") or absence of any crosslinker. Changing polymerization conditions and incorporation of comonomers with different degrees of polarities also lead to a dramatic and unexpected improvement in the shear thinning properties. The ability to tune shear thinning behavior of polyacrylates beyond monomer choices is beneficial in improving processing properties across many application spaces including binders, flow improvers, coatings, and adhesives.

As described herein, mixtures of monofunctional acrylic monomer and polymeric linear or branched hydrophobic molecules with reactive, cross-linkable dienes are reacted in one or more solvents such as toluene and/or 2-butanol to yield branched polyacrylate. Several distinct processes are employed varying the rate of initiation *via* reaction temperature and the order of addition of the crosslinker and mono-functional monomer(s).

Crosslinked polyacrylates described herein can be characterized gel permeation chromatography (GPC) and rheology. Oscillatory rheology was used to determine the polymer flow temperature, cross exponent (*a*), and zero-shear viscosity ($\eta_0$) through application of the Cox-Merz Rule. The polymer flow temperature indicates the temperature at which the polymer will begin to flow readily under gravity. The cross exponent, described further below, and the zero-shear viscosity are determined by fitting a generalized cross model to the complex viscosity of each material as a function of temperature. A lower cross exponent indicates higher shear thinning. Finally, zero-shear viscosity is an assessment of the viscosity (or flowability) of the bulk material. Desirably, the crosslinked polyacrylates described herein are flowable as opposed to being a network, film, or gel. The GPC methods are described in the Examples section below.

Thus, in any embodiment are crosslinked polyacrylates comprising the reaction product of one or more monofunctional acrylic monomers; and one or more polyolefinic crosslinkers having at least two reactive dienes and an Mn value of greater than 1000 g/mole; wherein the crosslinked polyacrylates have an Mw of at least 30,000 g/mole. These crosslinked polyacrylates are flowable at temperatures from 0 to 200 °C (as defined by the Polymer Flow Temperature, determined as described in the Examples section) and this flowability can be tailored by the choice of monomer or monomers, the choice of crosslinker, the process conditions used when combining the reagents to form the crosslinked polyacrylates, or a combination of these.

In any embodiment the crosslinked polyacrylates have a cross exponent of less than 1.0, or less than 0.80, or less than 0.70, or less than 0.60, or less than 0.55, or less than 0.50. In any embodiment the crosslinked polyacrylates have a cross exponent within a range from 0.20, or 0.30 to 0.50, or 0.55, or 0.60, or 0.65, or 0.70, or 0.80, or 1.0. In any embodiment the cross exponent of an inventive crosslinked polyacrylates is lower than the corresponding non-crosslinked polyacrylates or the same polyacrylates crosslinked using lower molecular weight crosslinkers (Mn less than 500 g/mole, or less than 400 g/mole).

In any embodiment the crosslinked polyacrylates have an Mw of at least 30,000 g/mole, or 50,000 g/mole, or 60,000 g/mole, or at least 70,000 g/mole, or at least 80,000 g/mole, or at least 100,000 g/mole. In any embodiment, the crosslinked polyacrylates have an Mw value within a range from 30,000 g/mole, or 50,000, or 60,000, or 70,000, or 80,000, or 100,000 g/mole to 200,000, or 300,000, or 400,000, or 500,000, or 800,000 g/mole.

In any embodiment the crosslinked polyacrylates have an Mz of at least 50,000 g/mole, or 80,000 g/mole, or 100,000 g/mole, or at least 120,000 g/mole, or at least 150,000 g/mole, or at least 200,000 g/mole, or at least 300,000 g/mole, or at least 400,000 g/mole, or at least 500,000 g/mole. In any embodiment, the crosslinked polyacrylates have an Mz value within a range from 50,000, or 80,000, or 100,000, or 120,000, or 150,000, or 200,000, or 300,000, or 400,000 or 500,000 g/mole to 600,000, or 700,000, or 800,000, or 900,000, or 1,000,000, or 1,500,000, or 2,000,000, or 3,000,000, or 4,000,000 g/mole.

In any embodiment the crosslinked polyacrylates have a PDI of at greater than 2.4, or greater than 2.5, or greater than 3.0, or greater than 4.0, or greater than 5.0. In any embodiment the crosslinked polyacrylates have a PDI within a range from 2.4, or 2.5, or 3.0, or 4.0, or 5.0 to 10, or 12, or 16, or 18, or 20.

In any embodiment the crosslinked polyacrylates have a zero shear-viscosity (20 °C) of at least 500 Pa-s, or at least 600 Pa-s, or at least 800 Pa-s, or at least 1000 Pa-s; In any embodiment the crosslinked polyacrylates have a zero shear-viscosity (20 °C) within a range from 500, or 600, or 800, or 1000 Pa-s to 10,000, or 20,000, or 60,000, or 100,000, or 400,000, or 600,000, or 1,000,000, or 1,500,000, or 2,000,000, or 2,500,000, or 3,000,000, or 3,500,000 Pa-s.

In any embodiment the crosslinked polyacrylates have a G" value (20 °C, 0.1 rad/s) of at least 10 Pa, or at least 20, or at least 100 Pa, or at least 1000 Pa, or at least 5000 Pa. In any embodiment the crosslinked polyacrylates have a G" value (20 °C, 0.1 rad/s) within a range from 10, or 20, or 100, or 1000, or 5000 Pa to 10,000, or 20,000, or 30,000, or 40,000, or 50,000 Pa.

In any embodiment the crosslinked polyacrylates have a G" value (20 °C, 100 rad/s) of at least 15,000 Pa, or at least 30,000 Pa, or at least 120,000 Pa, or 140,000 Pa, or 160,000 Pa, or 200,000 Pa. In any embodiment the crosslinked polyacrylates have a G" value (20 °C, 100 rad/s) within a range from 15,000, or 30,000, or 120,000, or 140,000, or 160,000, or 200,000 Pa to 400,000, or 450,000, or 500,000, or 600,000, or 800,000, or 1,000,000, or 2,000,000, or 3,000,000, or 4,000,000, or 5,000,000 Pa.

In any embodiment the crosslinked polyacrylates have a G" value (110 °C, 0.1 rad/s) of at least 20 Pa, or at least 100 Pa, or at least 1000 Pa, or at least 5000 Pa. In any embodiment the crosslinked polyacrylates have a G" value (110 °C, 0.1 rad/s) within a range from 20, or 100, or 1000, or 5000 Pa to 10,000, or 20,000, or 30,000, or 40,000 or 80,000, or 100,000, or 150,000 Pa.

In any embodiment the crosslinked polyacrylates have a G" value (110 °C, 100 rad/s) of at least 3000 Pa, or 10,000 Pa, or 20,000 Pa, or 50,000 Pa, or 100,000 Pa, or 120,000 Pa, or 140,000 Pa, or 160,000 Pa, or 200,000 Pa. In any embodiment the crosslinked polyacrylates have a G" value (110 °C, 100 rad/s) within a range from 3000, or 10,000, or 20,000, or 50,000, or 100,000, or 120,000, or 140,000, or 160,000, or 200,000 Pa to 400,000, or 450,000, or 500,000, or 600,000, or 800,000, or 1,000,000, or 1,400,000, or 1,600,000, or 1,800,000, or 2,000,000 Pa.

In any embodiment the crosslinked polyacrylates have a polymer flow temperature within a range from 0, or 20, or 30, or 40 °C to 90, or 100, or 140, or 160, or 200 °C.

In any embodiment the crosslinked polyacrylates have a Weight Average Monomer Solubility Parameter ($MPa^{1/2}$) within a range from 5, or 10 $MPa^{1/2}$ to 20, or 25 or 30 $MPa^{1/2}$. In any embodiment the crosslinked polyacrylates have a Flory-Fox Monomer Glass Transition Temperature, $T_g$ (°C) within a range from -60, or -50, or -40, or -30 °C to 20, or 30, or 50, or 70, or 100 °C. In any embodiment the crosslinked polyacrylates have a Flory-Fox Polymer Glass Transition Temperature, $T_g$ (°C) within a range from -60, or -50, or -20 °C to 20, or 30, or 40, or 50, or 60, or 70, or 100, or 110 °C.

The identity and properties of the polyolefinic crosslinkers can also be tailored to suit a desirable use. In any embodiment the polyolefinic crosslinker is a hydrophobic compound having an Mn value of at least 1000 g/mole, or 2000 g/mole and having at least two reactive dienes. In any embodiment the polyolefinic crosslinker is partially or fully hydrogenated. Also, in any embodiment polar groups such as those comprising nitrogen and/or oxygen are substantially absent from the polyolefinic crosslinker with the exception of the two reactive dienes, in which case such polar groups may be present such as an acrylate group.

In any embodiment the polyolefinic crosslinker has an Mn value of at least 1000 g/mole, or at least 2000 g/mole, or at least 3000 g/mole. In any embodiment the polyolefinic crosslinker has an Mn value within a range from 1000, or 2000, or 3000 g/mole to 4000, or 5000, or 6000 g/mole. In any embodiment the polyolefinic crosslinker has a PDI of 2.2, or 2, or 1.9, or 1.8 or less.

In any embodiment the polyolefinic crosslinker is a polyolefin homopolymer or copolymer having at least two reactive dienes and is formed from olefin monomers selected from C2 to C10, or C15, or C20, or C25, or C30, or C50 olefins, wherein the homopolymer or copolymer is linear or branched, and wherein the branching may comprise C1 to C50 hydrocarbon branching. In any embodiment the polyolefinic crosslinker is a polybutadiene or polyfarnesene, or a combination of the two in any desirable molar ratio, having at least two reactive dienes. In any embodiment the polybutadiene or polyfarnesene, with the exception of the at least two reactive dienes, is hydrogenated.

In any embodiment the polyolefinic crosslinker is selected from the group consisting of the structures represented by:

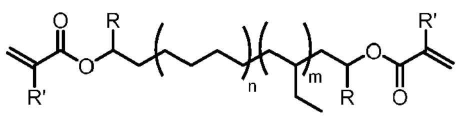

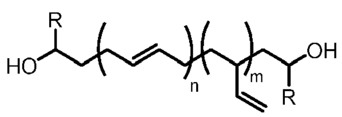

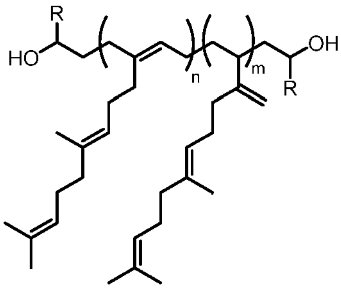
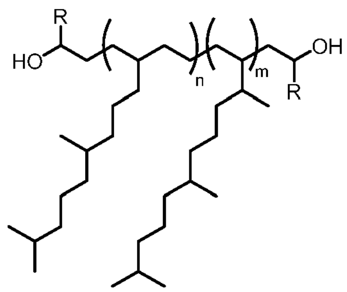

and combinations thereof, wherein n and m are integers within a range from 1, or 2, or 4 to 10, or 20, or 30, or 40, and wherein any one or more of the hydroxyl groups in the structures may be esterified to form the acrylate analogue, and wherein R is a hydrocarbon radical and R' is hydrogen or methyl.

The identity and properties of the monofunctional acrylic monomers can also be chosen and/or tailored to suit a desirable crosslinked polyacrylate. One or a combination of any type of monofunctional acrylic monomer can be selected and combined to form the desired crosslinked polyacrylate. In any embodiment the one or more monofunctional acrylic monomers are selected from structures represented by the formula $CH_2$=CR-C(O)X-R', wherein R is hydrogen or methyl, X independently is oxygen or a group of the formula NR", R' is hydrogen or a linear, branched, or cyclic hydrocarbon radical, and R" is hydrogen or a linear, branched, or cyclic hydrocarbon radical. In any embodiment, the linear hydrocarbon radical is a C1 or C10 or C21 to C50, or C80, or C100, or C200, or C300, or C400 hydrocarbon radical; and in any embodiment, the branched hydrocarbon radical is a C4 or C10 or C21 to C40, or C60, or C80, or C100, or C200, or C300, or C400 hydrocarbon radical; and in any embodiment the cyclic hydrocarbon is a C5 or C10 to C20, or C40, or C60, or C80 hydrocarbon radical wherein the cyclic hydrocarbon may be a multicyclic hydrocarbon radical.

In any embodiment the one or more monofunctional acrylic monomers are selected from the group consisting of lauryl acrylate, n-butyl acrylate, benzyl acrylate, acrylic acid, lauryl methacrylate, hydroxypropyl methacrylate, 2-hydroxyethyl methacrylate, 2-hydroxyethyl acrylate, methacrylic acid, n-butyl methacrylate, t-butyl methacrylate, methyl methacrylate, cyclohexyl methacrylate, polybutadiene methacrylate, benzyl methacrylate, 2-phenoxyethyl methacrylate, and poly(ethylene glycol) methacrylate, and combinations thereof.

In a particular embodiment are crosslinked polyacrylates comprising the reaction product of one or more monofunctional acrylic monomers; one or more polyolefinic crosslinkers having at least two reactive dienes and an Mn value of greater than 1000 g/mole; one or more initiators, and one or more chain transfer agents, wherein the crosslinked polyacrylates have an Mw of at least 30,000 g/mole.

The inventive crosslinked polyacrylates can be described by any combination of features disclosed herein. For instance, in any embodiment are crosslinked polyacrylates comprising the reaction product of one or more monofunctional acrylic monomers; one or more polyolefinic crosslinkers having at least two reactive dienes and an Mn value of greater than 1000 g/mole; one or more initiators, and one or more chain transfer agents, wherein the crosslinked polyacrylates have an Mw of at least 30,000 g/mole and a zero shear-viscosity (20 to 110 °C) within a range from 500 Pa-s to 3,500,000 Pa-s.

In another embodiment are crosslinked polyacrylates comprising the reaction product of one or more monofunctional acrylic monomers; one or more polyolefinic crosslinkers having at least two reactive dienes and an Mn value of greater than 1000 g/mole; one or more initiators, and one or more chain transfer agents, wherein the crosslinked polyacrylates have an Mw of at least 30,000 g/mole and a polymer flow temperature within a range from 20 °C to 200 °C.

By combining the reagents with one another, the polyacrylates and crosslinked polyacrylates in accordance with the disclosure may be obtained in by any suitable means such as by solution polymerization, bulk polymerization, or emulsion polymerization, and, in any embodiment by radical solution polymerization. These methods are set out in Ullmann's ENCYCLOPEDIA OF INDUSTRIAL CHEMISTRY, Sixth Edition (Wiley). As well as methods of conventional radical polymerization it is also possible to employ related methods of controlled radical polymerization, such as, for example, ATRP (Atom Transfer Radical Polymerization), NMP (Ni-trioxide-Mediated Polymerization), or RAFT (Reversible Addition Fragmentation Chain Transfer) to prepare the polyacrylates and crosslinked polyacrylates described herein. Typical free radical polymerization is carried out using a polymerization initiator and, in any embodiment, molecular weight regulators.

The initiators which can be used include, but are not limited to, azo initiators such as 1,1-azobiscyclohexanecarbonitrile, and 2,2'-azobis(2-methylpropionitrile), and other azo compounds of the general formula $R^1$-N=N-$R^2$, where are $R^1$ and $R^2$ can be alkyls or aryls; and also peroxy compounds such as methyl ethyl ketone peroxide, acetylacetone peroxide, dilauryl peroxide, tert-butyl peroxy-2-ethylhexanoate, ketone peroxide, tert-butyl peroctoate, methyl isobutyl ketone peroxide, cyclohexanone peroxide, dibenzoyl peroxide, tert-butyl peroxybenzoate, tert-butylperoxyisopropyl carbonate, 2,5-bis(2-ethylhexanoate, tert-butylperoxy-3,5,5-trimethylhexanoate, dicumyl peroxide, 1,1-bis(tert-butylperoxy)cyclohexane, 1,1-bis(tert-butylperoxy)-3,3,5-trimethylcycohexane, cumyl hydroperoxide, tert-butyl hydroperoxide, bis(4-tert-butylcyclohexyl) peroxydicarbonate, and other peroxy compounds of the general formula $R^1$-O-O-$R^2$, where are

$R^1$ and $R^2$ can be alkyls or aryls; mixtures of two or more of these compounds with one another, and mixtures of any of these compounds with other compounds that form free radicals.

Such initiators may be used either individually or in mixture. In any embodiment they are combined with the reagents to form the crosslinked polyacrylates within a range from 0.05 to 10 wt% by weight of all the reagents, or within a range from 3 to 8 wt%. In any embodiment the initiators are combined with the reagents to form the crosslinked polyacrylates in a molar ratio relative to the polyolefinic crosslinker within a range of from 0.2 to 1.6, or 0.3 to 1.4, or 0.3 to 1, or 0.3 to 0.8.

Initiators have a measurable half-life based on the solvent system they are in and the temperature. Initiators with different half-lives may be combined to form the crosslinked polyacrylates described herein. It is particularly desirable to perform the radical reactions described herein using initiators by tailoring the temperature and/or solvent to the initiator used to obtain a desirable half-life to reduce, for instance, gelling in the reaction. In any embodiment, the reagents are combined with an initiator wherein the combining takes place at a temperature such that the initiator half-life is within a range from 1 to 5, or 8, or 10 hours.

In any embodiment chain transfer agents (CTA), or molecular weight regulators, can be combined with the reagents to form the crosslinked polyacrylates. Chain transfer agents include but are not limited to mercapto compounds such as t-dodecyl mercaptan, dialkyl sulfides, dialkyl disulfides and/or diaryl sulfides, such as di-n-butyl sulfide, di-n-octyl sulfide, diphenyl sulfide, thiodiglycol, ethylthioethanol, diisopropyl disulfide, di-n-butyl disulfide, di-n-hexyl disulfide, diacetyl disulfide, diethanol disulfide, di-tert-butyl trisulfide and dimethyl sulfoxide, ethyl thioglycolate, 2-ethylhexyl thioglycolate, cysteine, 2-mercaptoethanol, 3-mercaptopropanol, 3-mercaptopropan-1,2-diol, 1,4-mercaptobutanol, mercaptoacetic acid, 3-mercaptopropionic acid, mercaptosuccinic acid, thioglycerol, thioacetic acid, thiourea and alkyl mercaptans such as n-butyl mercaptan, n-hexyl mercaptan and n-dodecyl mercaptan. Non-mercaptans can also be used such as dimeric alpha-methylstyrene, (2,4-diphenyl-4-methyl-1-pentene), enol ethers of aliphatic and/or cycloaliphatic aldehydes, terpenes, beta-terpinene, terpinolene, 1,4-cyclohexadiene, 1,4-dihydronaphthalene, 1,4,5,8-tertrahydronapthalene, 2,5-dihydrofuran, 2,5-dimethylfuran and/or 3,6-dihdro-2H-pyran.

Such CTA's may be used either individually or in mixture. In any embodiment a CTA is combined with the reagents to form the crosslinked polyacrylates within a range from 0.05 to 10 wt% by weight of all the reagents, or within a range from 3 to 8 wt%. In any embodiment the CTA's are combined with the reagents to form the crosslinked polyacrylates in a molar ratio relative to the initiator within a range of from 1 to 5, or 1.2 to 4, or 1.4 to 3.5.

As mentioned, it is desirable to have a solvent or mixture of solvents within which to combine the reagents and to perform the radical polymerization and crosslinking reactions described herein, The preferred solvents include aromatic hydrocarbons such as toluene, xylene; esters such as butyl acetate, ethyl acetate, propyl acetate; ketones such as ethyl methyl ketone, acetone, methyl isobutyl ketone or cyclohexanone; alcohols such as isopropanol, n-propanol, isobutanol; ethers such a glycol monomethyl ethers, glycol monoethyl ethers, glycol monobutyl ethers; aliphatics such as pentane, hexane, cycloalkanes and substituted cycloalkanes such as cyclohexane, and mixtures of any of these.

Thus in any embodiment, the crosslinked polyacrylates described herein are made by a method comprising combining one or more monofunctional acrylic monomers; one or more polyolefinic crosslinkers having at least two reactive dienes and an Mn value of greater than 1000 g/mole; optionally one or more initiators, and optionally one or more chain transfer agents, wherein the crosslinked polyacrylates have an Mw of at least 30,000 g/mole. The reagents are preferably combined in one or a mixture of solvents, the mixtures being in any desirable volume or mass ratio. The way in which each reagent is combined (either simultaneously, continuously and gradually, or fractionally) as well as the conditions in which the reagents are combined (such as temperature and solvent) will influence the properties of the final crosslinked polyacrylates.

There are several ways in which the reagents can be added or combined with one another to form the crosslinked polyacrylates described herein. In any embodiment is a method of forming crosslinked polyacrylates having an Mw of at least 30,000 g/mole comprising combining one or more monofunctional acrylic monomers with a polyolefinic crosslinker having at least two reactive dienes, wherein:

(a) the polyolefinic crosslinker is combined over time;
(b) both are combined simultaneously;
(c) the monofunctional acrylic monomers are combined over time, or
(d) both the monofunctional acrylic monomers and the polyolefinic crosslinker are combined over time with one another.

It is desirable to form a flowable crosslinked polyacrylate that is not a gel and has the molecular weight and zero-shear viscosity features described above. In any embodiment the method further comprises combining an initiator. In any embodiment the initiator is combined simultaneously with the monofunctional acrylic monomers and polyolefinic crosslinker. In another embodiment the initiator is combined over time, either continuously or fractionally, with the monofunctional acrylic monomers and polyolefinic crosslinker. The identity of the initiator as well as the temperature at which it is

combined can control the final properties of the crosslinked polyacrylate. In any embodiment the initiator is combined with the monofunctional acrylic monomers and polyolefinic crosslinker over time, such as within a range from 10 to 100, or 200, or 300 minutes. Given the temperature dependence of the initiator(s) behavior, in any embodiment the combining takes place at a temperature such that the half-life of the initiator is within a range from 1 to 5, or 8, or 10 hours.

In any embodiment the radical polymerizations, or combining of reagents, described herein are carried out at a temperature within a lower limit of 20, or 25, or 30, or 35, or 40, or 45, or 50, or 55, or 60 °C to an upper limit of 95, or 100, or 105, or 110, or 120, or 140 °C.

In any embodiment of the methods described herein, the combining of reagents takes place at a temperature of 90 °C or more. In any embodiment, the combining takes place at a temperature of less than 90 °C. In any embodiment, the combining takes place at a temperature within a range of from 88 to 95 °C. And in any embodiment, the combining takes place at a temperature within a range of from 65 to 88 °C.

The time over which the reagents are added to one another can be a factor in the methods described herein. Thus in any embodiment, the acrylic monomer and polyolefinic crosslinker (or the acrylic monomer or polyolefinic crosslinker) are combined continuously over time within a range from 10 to 100, or 200, or 300 minutes. Also in any embodiment, the acrylic monomer and polyolefinic crosslinker (or the acrylic monomer or polyolefinic crosslinker) are combined in fractional portions over time within a range from 10 to 100, or 200, or 300 minutes.

In any embodiment, the polyolefinic crosslinker is combined in an amount of 0.1 to 5, or 10, or 12, or 16, or 20 wt% by weight of the polyolefinic crosslinker, one or more monofunctional acrylic monomers, and initiator(s). In any embodiment, the monofunctional acrylic monomers are combined in an amount of 1, or 4, or 6, or 10 wt% to 20, or 30, or 40, or 50, or 60, or 70, or 80, or 84, or 88, or 90, or 95, or 99.9 wt% by weight of the reagents combined (acrylic monomers, polyolefinic crosslinker, and other reagents such as initiator).

Thus, in any embodiment are crosslinked polyacrylates comprising at least two polyacrylates comprising one or more monofunctional acrylic monomer derived units, the at least two polyacrylates bound to one another by at least one polyolefinic crosslinker, wherein the at least one polyolefinic crosslinker has an Mn value of greater than 1000 g/mole, and wherein the crosslinked polyacrylate has an Mw of at least 30,000 g/mole. If there are more than one polyolefinic crosslinker they may be different in Mn and polymeric structure (linear, branched, copolymer, etc.). Described in this way is a macromolecular composition having distinct components derived from monomer units, wherein the crosslinker is a unit and the polyacrylates are made up of many units which can be the same or different in identity. Also, described in this way it is understood that the polyolefinic crosslinker that is part of the macromolecule is reacted, meaning that at least two of its reactive dienes have formed a bond with each of the two polyacrylates.

Also in another embodiment are crosslinked polyacrylates, each polyacrylate comprising one or more monofunctional acrylic monomers forming at least two polymeric chains bound to one another by at least one polyolefinic crosslinker, wherein the polyolefinic crosslinker has an Mn value of greater than 1000 g/mole, wherein the crosslinked polyacrylates have an Mw of at least 30,000 g/mole and a zero shear-viscosity (20 °C) within a range from 500 Pa-s to 3,500,000 Pa-s.

Also in another embodiment are crosslinked polyacrylates, each polyacrylate comprising one or more monofunctional acrylic monomers forming at least two polymeric chains bound to one another by at least one polyolefinic crosslinker, wherein the polyolefinic crosslinker has an Mn value of greater than 1000 g/mole, wherein the crosslinked polyacrylates have an Mw of at least 30,000 g/mole and a polymer flow temperature within a range from 20 °C to 200 °C.

It is desirable that a separate method step, after combining the reagents, not be necessary to effect the full reaction of the acrylic monomers and crosslinkers described herein, such as another heating step, pressure, UV or other radiation exposure, or the addition of other chemical reagents. Thus, in any embodiment an additional step of curing or effecting crosslinking is absent.

The properties of the crosslinked polyacrylates described in this macromolecular embodiment are the same as described elsewhere in the specification. In any embodiment the crosslinked polyacrylates have a cross exponent of less than 1.0, or less than 0.80, or less than 0.70, or less than 0.60, or less than 0.55, or less than 0.50. In any embodiment the crosslinked polyacrylates have a cross exponent within a range from 0.20, or 0.30 to 0.50, or 0.55, or 0.60, or 0.65, or 0.70, or 0.80, or 1.0. In any embodiment the cross exponent of an inventive crosslinked polyacrylates is lower than the corresponding non-crosslinked polyacrylates or the same polyacrylates crosslinked using lower molecular weight crosslinkers (Mn less than 500 g/mole, or less than 400 g/mole).

In any embodiment the crosslinked polyacrylates have an Mw of at least 30,000 g/mole, or 50,000 g/mole, or 60,000 g/mole, or at least 70,000 g/mole, or at least 80,000 g/mole, or at least 100,000 g/mole. In any embodiment, the crosslinked polyacrylates have an Mw value within a range from 30,000 g/mole, or 50,000, or 60,000, or 70,000, or 80,000, or 100,000 g/mole to 200,000, or 300,000, or 400,000, or 500,000, or 800,000 g/mole.

In any embodiment the crosslinked polyacrylates have an Mz of at least 50,000 g/mole, or 80,000 g/mole, or 100,000 g/mole, or at least 120,000 g/mole, or at least 150,000 g/mole, or at least 200,000 g/mole, or at least 300,000 g/mole, or at least 400,000 g/mole, or at least 500,000 g/mole. In any embodiment, the crosslinked polyacrylates have an Mz value within a range from 50,000, or 80,000, or 100,000, or 120,000, or 150,000, or 200,000, or 300,000, or 400,000 or

500,000 g/mole to 600,000, or 700,000, or 800,000, or 900,000, or 1,000,000, or 1,500,000, or 2,000,000, or 3,000,000, or 4,000,000 g/mole.

In any embodiment the crosslinked polyacrylates have a PDI of at greater than 2.4, or greater than 2.5, or greater than 3.0, or greater than 4.0, or greater than 5.0. In any embodiment the crosslinked polyacrylates have a PDI within a range from 2.4, or 2.5, or 3.0, or 4.0, or 5.0 to 10, or 12, or 16, or 18, or 20.

In any embodiment the crosslinked polyacrylates have a Weight Average Monomer Solubility Parameter ($MPa^{1/2}$) within a range from 5, or 10 $MPa^{1/2}$ to 20, or 25 or 30 $MPa^{1/2}$. In any embodiment the crosslinked polyacrylates have a Flory-Fox Monomer Glass Transition Temperature, $T_g$ (°C) within a range from -60, or -50, or -40, or -30 °C to 20, or 30, or 50, or 70, or 100 °C. In any embodiment the crosslinked polyacrylates have a Flory-Fox Polymer Glass Transition Temperature, $T_g$ (°C) within a range from -60, or -50, or -20 °C to 20, or 30, or 40, or 50, or 60, or 70, or 100, or 110 °C.

As mentioned, the identity and properties of the polyolefinic crosslinker can also be tailored to suit a desirable crosslinked polyacrylate. In any embodiment the polyolefinic crosslinker is a hydrophobic compound having an Mn value of at least 1000 g/mole, or 2000 g/mole and having at least two reactive dienes. In any embodiment the polyolefinic crosslinker is partially or fully hydrogenated. Also, in any embodiment polar groups such as those comprising nitrogen and/or oxygen are substantially absent from the polyolefinic crosslinker with the exception of the two reactive dienes, in which case such polar groups may be present such as an acrylate group.

In any embodiment the polyolefinic crosslinker has an Mn value of at least 1000 g/mole, or at least 2000 g/mole, or at least 3000 g/mole. In any embodiment the polyolefinic crosslinker has an Mn value within a range from 1000, or 2000, or 3000 g/mole to 4000, or 5000, or 6000 g/mole. In any embodiment the polyolefinic crosslinker has a PDI of 2.2, or 2, or 1.9, or 1.8 or less.

In any embodiment the polyolefinic crosslinker is a polyolefin homopolymer or copolymer having at least two reactive dienes and is formed from olefin monomers selected from C2 to C10, or C15, or C20, or C25, or C30, or C50 olefins, wherein the homopolymer or copolymer is linear or branched, and wherein the branching may comprise C1 to C50 hydrocarbon branching. In any embodiment the polyolefinic crosslinker is a polybutadiene or polyfarnesene derived group, or a combination of the two in any desirable molar ratio.

In any embodiment the polyolefinic crosslinker is selected from the group consisting of the structures represented by:

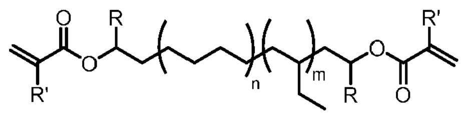

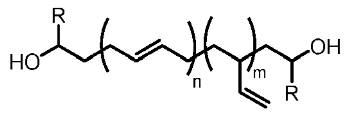

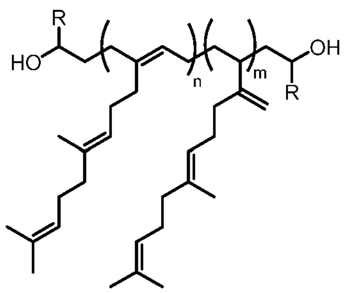

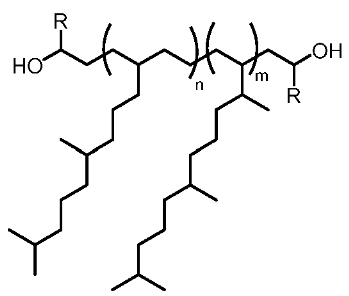

and combinations thereof, wherein n and m are integers within a range from 1, or 2, or 4 to 10, or 20, or 30, or 40, and wherein any one or more of the hydroxyl groups in the structures may be esterified to form the acrylate analogue, and wherein R is a hydrocarbon radical and R' is hydrogen or methyl.

In any embodiment described as the macromolecule, the one or more monofunctional acrylic monomer derived units are selected from radical structures represented by the formula:

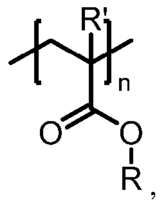

wherein R' is hydrogen or methyl, and R is hydrogen or a linear, branched, or cyclic hydrocarbon radical, and n is an integer from 10 to 1000, or 4000, or 6000, or 8000, or 10,000. In any embodiment, the linear hydrocarbon radical is a C1 or C10 or C21 to C50, or C80, or C100, or C200, or C300, or C400 hydrocarbon radical; and in any embodiment, the branched hydrocarbon radical is a C4 or C10 or C21 to C40, or C60, or C80, or C100, or C200, or C300, or C400 hydrocarbon radical; and in any embodiment the cyclic hydrocarbon is a C5 to C20, or C40, or C60, or C80 hydrocarbon radical wherein the cyclic hydrocarbon may be a multicyclic hydrocarbon radical.

In any embodiment described as the macromolecule, the one or more monofunctional acrylic monomer derived units are selected from the group consisting of radicals of lauryl acrylate, n-butyl acrylate, benzyl acrylate, acrylic acid, lauryl methacrylate, hydroxypropyl methacrylate, 2-hydroxyethyl methacrylate, 2-hydroxyethyl acrylate, methacrylic acid, n-butyl methacrylate, t-butyl methacrylate, methyl methacrylate, cyclohexyl methacrylate, polybutadiene methacrylate, benzyl methacrylate, 2-phenoxyethyl methacrylate, and poly(ethylene glycol) methacrylate, and combinations thereof.

As mentioned above, in any embodiment the crosslinked polyacrylates have a zero shear-viscosity (20 °C) of at least 500 Pa-s, or at least 600 Pa-s, or at least 800 Pa-s, or at least 1000 Pa-s; In any embodiment the crosslinked polyacrylates have a zero shear-viscosity (20 °C) within a range from 500, or 600, or 800, or 1000 Pa-s to 10,000, or 20,000, or 60,000, or 100,000, or 400,000, or 600,000, or 1,000,000, or 1,500,000, or 2,000,000, or 2,500,000, or 3,000,000, or 3,500,000 Pa-s.

In any embodiment the crosslinked polyacrylates have a G" value (20 °C, 0.1 rad/s) of at least 10 Pa, or at least 20, or at least 100 Pa, or at least 1000 Pa, or at least 5000 Pa. In any embodiment the crosslinked polyacrylates have a G" value (20 °C, 0.1 rad/s) within a range from 10, or 20, or 100, or 1000, or 5000 Pa to 10,000, or 20,000, or 30,000, or 40,000, or 50,000 Pa.

In any embodiment the crosslinked polyacrylates have a G" value (20 °C, 100 rad/s) of at least 15,000 Pa, or at least 30,000 Pa, or at least 120,000 Pa, or 140,000 Pa, or 160,000 Pa, or 200,000 Pa. In any embodiment the crosslinked polyacrylates have a G" value (20 °C, 100 rad/s) within a range from 15,000, or 30,000, or 120,000, or 140,000, or 160,000, or 200,000 Pa to 400,000, or 450,000, or 500,000, or 600,000, or 800,000, or 1,000,000, or 2,000,000, or 3,000,000, or 4,000,000, or 5,000,000 Pa.

In any embodiment the crosslinked polyacrylates have a G" value (110 °C, 0.1 rad/s) of at least 20 Pa, or at least 100 Pa, or at least 1000 Pa, or at least 5000 Pa. In any embodiment the crosslinked polyacrylates have a G" value (110 °C, 0.1 rad/s) within a range from 20, or 100, or 1000, or 5000 Pa to 10,000, or 20,000, or 30,000, or 40,000 or 80,000, or 100,000, or 150,000 Pa.

In any embodiment the crosslinked polyacrylates have a G" value (110 °C, 100 rad/s) of at least 3000 Pa, or 10,000 Pa, or 20,000 Pa, or 50,000 Pa, or 100,000 Pa, or 120,000 Pa, or 140,000 Pa, or 160,000 Pa, or 200,000 Pa. In any embodiment the crosslinked polyacrylates have a G" value (110 °C, 100 rad/s) within a range from 3000, or 10,000, or 20,000, or 50,000, or 100,000, or 120,000, or 140,000, or 160,000, or 200,000 Pa to 400,000, or 450,000, or 500,000, or 600,000, or 800,000, or 1,000,000, or 1,400,000, or 1,600,000, or 1,800,000, or 2,000,000 Pa.

In any embodiment the crosslinked polyacrylates have a polymer flow temperature within a range from 20, or 30, or 40 °C to 90, or 100, or 140, or 160, or 200 °C. For crosslinked polyacrylates with higher polymer flow temperature, such as those having a polymer flow temperature greater than 120, or 140 °C, the rheological measurements were carried out at 110 °C, and those zero shear-viscosity and G" are within the same ranges as stated above when measured at 20 °C.

In any embodiment, the choice of monofunctional acrylic monomer can influence the polymer flow temperature. But even with the same monofunctional acrylic monomer, the incorporation of the polyolefinic crosslinker tends to shift the polymer flow temperature higher relative to the using 1,6-hexanediol dimethacrylate (1,6-hexyl) as the crosslinker.

Further, combining the polyolefinic crosslinker with the one or more monofunctional acrylic monomers can decrease the cross exponent of the crosslinked polyacrylates in certain cases, relative to similar conditions and using 1,6-hexanediol dimethacrylate (1,6-hexyl) as the crosslinker.

## ADDITIONAL EMBODIMENTS

Additionally, or alternatively, the present disclosure may include any one or more of the following numbered embodiments:

Embodiment 1. Crosslinked polyacrylates comprising (or consisting of, or consisting essentially of) at least two polyacrylates comprising one or more monofunctional acrylic monomer derived units, the at least two polyacrylates bound to one another by at least one polyolefinic crosslinker, wherein the at least one polyolefinic crosslinker has an Mn value of greater than 1000 g/mole, and wherein the crosslinked polyacrylates have an Mw of at least 30,000 g/mole.

Embodiment 2. The crosslinked polyacrylates of embodiment 1, wherein the polyolefinic crosslinker comprises a polyolefin homopolymer or copolymer having at least two reactive dienes and is formed from olefin monomers selected from C2 to C50 olefins, wherein the homopolymer or copolymer is linear or branched, and wherein the branching may comprise C1 to C50 hydrocarbon branching.

Embodiment 3. The crosslinked polyacrylates of embodiments 1 or 2, wherein the polyolefinic crosslinker has a PDI of 2.2 or less.

Embodiment 4. The crosslinked polyacrylates of any one of the previous numbered embodiments, wherein the polyolefinic crosslinker has an Mn value within a range from 1000 to 6000 g/mole.

Embodiment 5. The crosslinked polyacrylates of any one of the previous numbered embodiments, wherein polar moieties are substantially absent from the polyolefinic crosslinker.

Embodiment 6. The crosslinked polyacrylates of any one of the previous numbered embodiments, wherein the polyolefinic crosslinker comprises a polybutadiene or polyfarnesene.

Embodiment 7. The crosslinked polyacrylates of any one of the previous numbered embodiments, wherein the polybutadiene or polyfarnesene is hydrogenated.

Embodiment 8. The crosslinked polyacrylates of any one of the previous numbered embodiments, wherein the polyacrylate has a PDI of 2.4 or less.

Embodiment 9. The crosslinked polyacrylates of any one of the previous numbered embodiments, having an Mn of at least 20,000 g/mole.

Embodiment 10. The crosslinked polyacrylates of any one of the previous numbered embodiments, having an Mw of at least 50,000 g/mole.

Embodiment 11. The crosslinked polyacrylates of any one of the previous numbered embodiments, having an Mz of at least 50,000 g/mole.

Embodiment 12. The crosslinked polyacrylates of any one of the previous numbered embodiments, having a PDI within a range from 2.5 to 20.

Embodiment 13. The crosslinked polyacrylates of any one of the previous numbered embodiments, wherein the one or more monofunctional acrylic monomer derived units are selected from radical structures within the polymer chain represented by the formula:

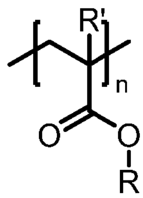

wherein R' is hydrogen or methyl, and R is hydrogen or a linear, branched, or cyclic hydrocarbon radical, and n is an integer from 10 to 10,000.

Embodiment 14. The crosslinked polyacrylates of any one of the previous numbered embodiments, wherein the one or more monofunctional acrylic monomer derived units are selected from the group consisting of radicals of lauryl acrylate, n-butyl acrylate, benzyl acrylate, acrylic acid, lauryl methacrylate, hydroxypropyl methacrylate, 2-hydroxyethyl methacrylate, 2-hydroxyethyl acrylate, methacrylic acid, n-butyl methacrylate, t-butyl methacrylate, methyl methacrylate, cyclohexyl methacrylate, polybutadiene methacrylate, benzyl methacrylate, 2-phenoxyethyl methacrylate, and poly(ethylene glycol) methacrylate, and combinations thereof.

Embodiment 15. The crosslinked polyacrylates of any one of the previous numbered embodiments, comprising the reaction product of one or more monofunctional acrylic monomers; and one or more polyolefinic crosslinker having at least two reactive dienes and an Mn value of greater than 1000 g/mole; wherein the crosslinked polyacrylates have an Mw of at least 30,000 g/mole.

Embodiment 16. The crosslinked polyacrylates of numbered embodiment 15, wherein the polyolefinic crosslinker comprises a polyolefin homopolymer or copolymer having at least two reactive dienes and is formed from olefin monomers selected from C2 to C50 olefins, wherein the homopolymer or copolymer is linear or branched, and wherein the branching may be C1 to C50 hydrocarbon branching.

Embodiment 17. The crosslinked polyacrylates of numbered embodiment 15 or 16, wherein the polyolefinic crosslinker is selected from the group consisting of the structures represented by:

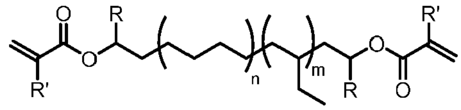

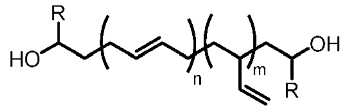

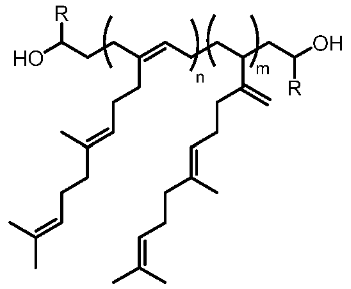

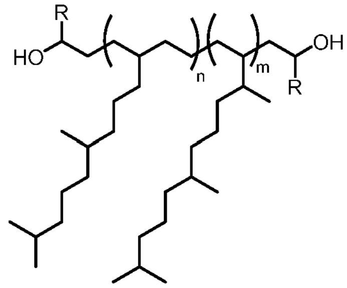

and combinations thereof, wherein n and m are integers within a range from 1 to 10, or 20, or 40, and wherein any one or more of the hydroxyl groups in the structures may be esterified to form the acrylate analogue, and wherein R is a hydrocarbon radical and R' is hydrogen or methyl.

Embodiment 18. The crosslinked polyacrylates of any one of numbered embodiments 15 to 17, wherein the one or more monofunctional acrylic monomers are selected from structures represented by the formula $CH_2$=CR-C(O)X-R', wherein R is hydrogen or methyl, X independently is oxygen or a group of the formula NR", R' is hydrogen, or a linear, branched, or cyclic hydrocarbon radical, and R" is hydrogen or a linear, branched, or cyclic hydrocarbon radical.

Embodiment 19. A method of forming crosslinked polyacrylates of any one of the previously numbered embodiments comprising combining one or more monofunctional acrylic monomers with a polyolefinic crosslinker having at least two reactive dienes, wherein: (a) the polyolefinic crosslinker is combined over time; (b) both are combined simultaneously; (c) the monofunctional acrylic monomers are combined over time, or (d) both the monofunctional acrylic monomers and the polyolefinic crosslinker are combined over time with one another.

Embodiment 20. The method of forming crosslinked polyacrylates of any one of the previously numbered embodiments wherein the combining takes place at a temperature of 90 °C or more.

Embodiment 21. The method of forming crosslinked polyacrylates of any one of the previously numbered embodiments wherein the combining takes place at a temperature of less than 90 °C.

Embodiment 22. The method of forming crosslinked polyacrylates of any one of the previously numbered embodiments wherein the combining takes place at a temperature within a range of from 88 to 95 °C.

Embodiment 23. The method of forming crosslinked polyacrylates of any one of the previously numbered embodiments wherein the combining takes place at a temperature within a range of from 65 to 88 °C.

Embodiment 24. The method of forming crosslinked polyacrylates of any one of the previously numbered embodiments wherein the monomer and crosslinker are added continuously over time within a range from 10 to 300 minutes.

Embodiment 25. The method of forming crosslinked polyacrylates of any one of the previously numbered embodiments wherein the monomer and crosslinker are added in fractional portions over time within a range from 10 to 300 minutes.

Embodiment 26. The method of forming crosslinked polyacrylates of any one of the previously numbered embodiments further comprising combining an initiator, wherein the initiator is combined with the monomers and crosslinker over time.

Embodiment 27. The method of forming crosslinked polyacrylates of any one of the previously numbered embodiments further comprising combining an initiator, wherein the initiator is combined simultaneously with the monomers and crosslinker.

Embodiment 28. The method of forming crosslinked polyacrylates of any one of the previously numbered embodiments further comprising combining an initiator, wherein the combining takes place at a temperature such that the initiator half-life is within a range from 1 to 10 hours.

Embodiment 29. The method of forming crosslinked polyacrylates of any one of the previously numbered embodiments wherein the polyolefinic crosslinker is combined in an amount of 0.1 to 20 wt% by weight of the polyolefinic crosslinker and one or more monofunctional acrylic monomers.

Embodiment 30. The method of forming crosslinked polyacrylates of any one of the previously numbered embodiments wherein each polyacrylate comprises one or more monofunctional acrylic monomers forming at least two polymeric chains bound to one another by at least one polyolefinic crosslinker having at least two reactive dienes, wherein the polyolefinic crosslinker has an Mn value of greater than 1000 g/mole; and wherein the crosslinked polyacrylates have an Mw of at least 30,000 g/mole.

Embodiment 31. The method of forming crosslinked polyacrylates of any one of the previously numbered embodiments wherein an additional step of curing or effecting crosslinking is absent.

The following non-limiting examples are provided to illustrate the disclosure.

EXAMPLES

All reactions were carried out in a 4-necked reaction vessel equipped with an overhead stirrer, a temperature probe, a nitrogen inlet (for sparging), a Friedrich condenser, and an addition funnel. Solvent, chain transfer agent (CTA) (optionally), and those monomers and/or crosslinkers to be added 'up front' were charged to the reactor at target weights and sparged with nitrogen for 15-30 minutes at room temperature. "Up front" means that the reaction was charged with that reagent at the beginning, time = 0; if two or more reagents are charged or "combined" up front, they are combined "simultaneously" at time = 0. In a separate container, CTA (optionally), initiator, and solvent were added at target weights and sparged with nitrogen for 15 minutes. For reactions with crosslinker and/or monomer added over time, these were also weighed into a separate container to target mass and sparged for 15-30 minutes. Added "over time" means that the corresponding reagent was added slowly over time, for example over 30, 60, or 240 minutes or other specified time period. The reaction flask was heated up to the target reaction temperature. For "up front" initiator addition, the initiator, solvent, and optional CTA mixture was added to the reaction to start the reaction. The reaction temperature was maintained at the target temperature as shown in Table 1. For reagent(s) added over time, the addition funnel was used to feed the reagent(s) over a specified time as shown in Table 1. After the reaction time was complete, the sample was cooled to ambient temperature. To retrieve solid polymer, the sample was poured into a PTFE dish and dried *en vacuo* until the residual solvent was no longer evident in FTIR. Reaction temperature, the identity and amount of the initiator, and solvent mixture were adjusted to prevent gelling and obtain a desired crosslinked polyacrylate based on monomer and crosslinker choice.

**Table 1. Process Conditions**

| Process Class | Process ID | Reaction Temperature (°C) | Total Reaction Time (minutes) | Crosslinker Addition | Monomer Addition | Initiator Addition |
|---|---|---|---|---|---|---|
| A | 1 | 90 | 300 | Added over time | All up front | All up front |
| B | 2 | 90 | 240 | All up front | All up front | All up front |
| B | 3 | 85 | 240 | All up front | All up front | All up front |
| C | 4 | 90 | 300 | All up front | Added over time | All up front |
| D | 5 | 85 | 300 | All up front | Added over time | Added over time |
| E | 6 | 85 | 300 | All up front | All up front | Added over time |
| C | 7 | 85 | 300 | All up front | Added over time | All up front |
| A | 8 | 85 | 300 | Added over time | All up front | All up front |
| C | 9 | 70 | 540 | All up front | Added over time | 4/5 added up front, 1/5 added at 180 min |
| B | 10 | 70 | 540 | All up front | All up front | 4/5 added up front, 1/5 added at 180 min |

(continued)

| Process Class | Process ID | Reaction Temperature (°C) | Total Reaction Time (minutes) | Crosslinker Addition | Monomer Addition | Initiator Addition |
|---|---|---|---|---|---|---|
| A | 11 | 70 | 540 | Added over time | All up front | 4/5 added up front, 1/5 added at 180 min |
| F | 12 | 85 | 300 | Added over time | Added over time | Added over time |

The starting reagents used to make the comparative and inventive example crosslinked polyacrylates and some of their characteristics are shown in Table 2A, Table 2B, and Table 2C. A "molecular weight" is simply the calculated value based on the atomic structure. The crosslinkers disclosed in Table 2B and Table 3 and used in the inventive Examples are made using anionic polymerization processes and have a PDI of less than 2. In some cases, a starting crosslinker material was esterified to form the corresponding acrylate material having crosslinkable dienes. To perform this, a 4-necked reaction vessel was equipped with an overhead stirrer, a temperature probe, a nitrogen inlet (for sparging), a condenser, and a Dean Stark trap. The alcohol-containing reagents (see Table 3) were added with methyl methacrylate to the reaction flask, with an excess of methyl methacrylate. The mixture was stirred at 60 °C for 30 minutes to ensure heterogeneity. 4-methoxyphenol was added, followed by 4-hydroxy-2,2,6,6,-tetramethylpiperidine-1-oxyl. The mixture was heated to a reflux temperature of 100 °C under a nitrogen blanket, and approximately 20 g of methyl methacrylate was distilled off. The mixture was cooled to 85 °C and lithium methoxide was added. The mixture was heated to 105 °C and methanol and methyl methacrylate were removed. After the onset of methyl methacrylate distillation, the reaction was held at 105 °C for 4 to 6 hours. The reaction was cooled to 70 °C and filtered through Celite 535. Residual methyl methacrylate was removed via rotary evaporation at 90 to 125 °C, until it was no longer evident by 1H NMR.

**Table 2A. Monomers**

| Short Name | Long Name | Source | Molecular Weight (g/mol) | Homopolymer $T_g$ (°C)[B] | Homopolymer Solubility Parameter ($MPa^{1/2}$)[C] |
|---|---|---|---|---|---|
| **LA** | Lauryl Acrylate (technical grade) | Sigma Aldrich | 240.38 | 30 | 17.7 |
| **n-BA** | n-butyl Acrylate | Sigma Aldrich | 128.17 | -53 | 18.5 |
| **BzA** | Benzyl Acrylate | Sigma Aldrich | 162.19 | 79 | 20.3 |
| **AA** | Acrylic Acid | Sigma Aldrich | 72.06 | 101 | 21.3 |
| **LMA** | Lauryl Methacrylate | Sigma Aldrich | 254.41 | -65 | 16.8 |
| **HPMA** | hydroxypropyl methacrylate | Sigma Aldrich | 144.17 | 72 | 22.4 |
| **2-HEMA** | 2-hydroxyethyl methacrylate | Sigma Aldrich | 130.14 | 102 | 23.8 |
| **2-HEA** | 2-hydroxyethyl acrylate | Sigma Aldrich | 116.1 | -14 | 25.5 |
| **MAA** | Methacrylic Acid | Sigma Aldrich | 86.06 | 228 | 26.8 |
| **n-BMA** | n-butyl Methacrylate | Sigma Aldrich | 142.2 | 20 | 17.9 |
| **t-BMA** | t-butyl Methacrylate | Sigma Aldrich | 142.2 | 115 | 17.7 |
| **MMA** | Methyl Methacrylate | Sigma Aldrich | 100.12 | 105 | 19.0 |

(continued)

| Short Name | Long Name | Source | Molecular Weight (g/mol) | Homopolymer $T_g$ (°C)[B] | Homopolymer Solubility Parameter ($MPa^{1/2}$)[C] |
|---|---|---|---|---|---|
| **CHMA** | Cyclohexyl Methacrylate | Sigma Aldrich | 168.23 | 66 | 18.5 |
| **KMA** | Krasol HLBH 5000M Methacrylate | Infineum[A] | 5000 | -57 | 18.0[D] |
| **BzMA** | Benzyl Methacrylate (M123) | Miwon Specialty Chemical Co, Ltd. | 176.21 | 55 | 20.3 |
| **2-PEMA** | 2-phenoxyethyl Methacrylate (M141HP) | Miwon Specialty Chemical Co, Ltd. | 206.24 | 54 | 21.0[E] |
| **PEGMA** | Poly(ethylene glycol) Methacrylate | Sigma Aldrich | 360 | -55[F] | 20.4 |

**Table 2B. Crosslinkers**

| Short Name | Long Name | Source | Molecular Weight (Mn) (g/mol) | Homopolymer $T_g$ (°C)[B] | Homopolymer Solubility Parameter ($MPa^{1/2}$)[C] |
|---|---|---|---|---|---|
| **P3000** | Krasol™ HLBH P3000 dimethacrylate | Infineum^ | 3000 | -46 | 18.0[D] |
| **P2000** | Krasol™ HLBH P2000 dimethacrylate | Infineum^ | 2000 | -52 | 18.0[D] |
| **1,6-hexyl** | 1,6-hexanediol dimethacrylate | Sigma Aldrich | 254.32 | - | 17.3[G] |
| **LP3000** | Krasol™ LBHP 3000 | Total Cray Valley | 3000 | -40 | 16.2 |
| **F3000** | Krasol™ F3000 | Total Cray Valley | 3000 | -65 | 18.0[D] |

**Table 2C. Other Reagents**

| Reagent | Short Name | Long Name | Source | Molecular Weight (g/mol) |
|---|---|---|---|---|
| **Chain Transfer Agent** | **CTA** | t-dodecylmercaptan | Sigma Aldrich | 202.4 |
| **Initiator** | **A** | t-butyl peroxy-2-ethylhexanoate (TBPEH) | United Initiator | 216.32 |
| | **B** | 2,2'-azobis(2-methylpropionitrile) | Sigma Aldrich | 164.21 |
| **Solvent** | **Toluene** | Toluene | Sigma Aldrich | 92.1 |
| | **Ethyl Acetate** | Ethyl Acetate | Sigma Aldrich | 88.11 |
| | **2-butanone** | 2-butanone | Sigma Aldrich | 72.11 |
| | **2-butanol** | 2-butanol | Sigma Aldrich | 74.12 |

The notes to Tables 2 A, B, and C are as follows: A-See the esterification Table 3, and esterification methods described above; B-Unless noted, values taken from online sources, literature, commercial brochures, and from the Physical Properties of Polymers Handbook, 2nd Ed., 2007, Springer; C-Unless noted, values taken from online sources, literature, and from the Physical Properties of Polymers Handbook, 2nd Ed., 2007, Springer; D-Value is for hydrogenated poly(butadiene); E-Estimated by comparison to other similar structures; F-Value is for amorphous poly(ethylene glycol); and G-Value is estimated based on hexyl methacrylate.

Table 2D gives further information about the initiators used, wherein chlorobenzene is obtained from Nouryon.

**Table 2D. Calculated Initiator Half-Lives based on Arrhenius Equation and Constant in Chlorobenzene**

| Initiator | | Calculated half-life ($t_{½}$)at each temperature (hour) | | |
|---|---|---|---|---|
| | | 90 °C | 85 °C | 70 °C |
| A | t-butyl peroxy-2-ethylhexanoate | 1.25 | 2.19 | 11.78 |
| B | 2,2'-azobis(2-methylpropionitrile) | 0.39 | 0.72 | 4.64 |

**Table 3. Reagents that were Esterified**

| Precursor Name | Starting Material | Source | Molecular Weight (Mn) (g/mol) |
|---|---|---|---|
| KMA | Krasol™ HLBH 5000M | Total Cray Valley | 5000 |
| P3000 | Krasol™ HLBH P3000 | Total Cray Valley | 3000 |
| P2000 | Krasol™ HLBH P2000 | Total Cray Valley | 2000 |

The following tables, Table 4 to Table 14 ("A" tables summarize reaction conditions and reagents used, while "B" tables summarize the characterization of the resulting materials) summarize the comparative polyacrylates and small-crosslinker polyacrylates (C1, C2, etc.) and the inventive crosslinked polyacrylates (E1, E2, etc.). The examples are generally ordered by process conditions as characterized in Table 1 above. These examples were characterized by various methods.

The moments of molecular weight (Mn, Mw, Mz) were determined by gel permeation chromatography (GPC-PS) using polystyrene standards (Acquity™ APC Polystyrene High MW Calibration Kit, 266 to 4,000,000 Da) as follows. Molecular weights (number average molecular weight (Mn), weight average molecular weight (Mw), and z-average molecular weight (Mz)) were determined using an Agilent Acuity P-SM-FTN and P-15m high temperature GPC-SEC (gel permeation/size exclusion chromatograph) equipped 15 with an on-line differential refractive index (DRI) detector and a PDA UV detector for 215, 254, and 304 wavelengths. The GPC used 3 Agilent PLgel 10 micron Mixed B LS columns. The column separation was performed using a flow rate of 1 mL/min and a nominal injection volume of 10 microliters. The detectors and columns are maintained at 30° C when in low flow mode (idle) and heated up to 35° C when preparing to run samples. The stream emerging 20 from the SEC columns was directed into the optical flow cell and then into the DRI detector. Solvent for the SEC experiment was inhibited THE (tetrahydrofuran). Polymer solutions were prepared by placing dry polymer in a glass container, adding the desired amount of THF. Once the sample was added to the machine it was given time to reach 35° C before the run began. The GPC runs a pre-run programmed equilibrium of approximately 1.5 hours. Samples were agitated for 2 to 15 hours depending on solubility. Samples were filtered after the agitation and before being run. All quantities were measured gravimetrically. The THE densities used to express the polymer concentration in mass/volume units are 0.887 g/mL at 68 °C. The injection sample concentration was 1 to 3 mg/mL. Prior to running each sample, the DRI detector and the injector were purged. Flow rate in the apparatus was then increased from 0.01 to 0.25 mL/minute, and the 30 DRI was allowed to stabilize for 4 to 5 hours before injecting the first sample. Software used to run the GPC and prepare reports was Empower™ 3, version 7.41.00.00.

Proton nuclear magnetic resonance (1H-NMR) were taken as follows. Samples were run on a Bruker 300 MHz NMR instrument. Samples were loaded into NMR tubes at a 50/50 ratio in deuterated chloroform. Scans (128) were performed and spectra were analyzed in iNMR software. Conversion of (meth)acrylates was calculated by the ratio of normalized ester protons to residual unsaturation.

Rheological properties such as G" and tan(δ) were measured as follows: Dried polymer samples were loaded onto a TA ARES G2 Rheometer equipped with 25 mm stainless steel parallel plates, a forced convection oven, and active cooling system. The loading gap was approximately 1 mm for all samples, and care was taken to remove bubbles during loading. Small amplitude oscillatory shear was utilized in the linear viscoelastic regime to measure G' and G" as a function of temperature and frequency. Frequency sweep measurements were performed at a number of temperatures to enable time-temperature superposition of the data. The target measurement temperatures were selected based on the physical

properties and feasibility of each material. It generally followed that for low-Tg materials, a reference temperature of 25 °C was used, and for high-Tg materials a reference temperature of 110 °C was used in the time-temperature superposition analysis. A Williams-Landel-Ferry model was used to perform time-temperature superposition. Despite the incorporation of multiple monomers of varying friction factors, the superposition was consistently successful to represent the data (See Figure 1 for a representative result of shifting). No vertical shifting was performed. Horizontal shift factors aT are provided as a function of temperature, such as in Figure 2.

Certain calculations were performed. The Weight Average Monomer Solubility Parameter was calculated using the provided solubility parameters in Tables 2A and 2B according to the equation (3) below:

$$Weight\ Average\ Monomer\ SP = \sum_i w_i SP_i \qquad (3)$$

where w; is the weight fraction of monomer i and the $SP_i$ is the solubility parameter of monomer i.

The Flory-Fox Monomer Glass Transition Temperature was calculated using the provided glass transition temperatures in Tables 2A and 2B according to the Flory Fox equation below (4), excluding the contribution from the crosslinker:

$$\frac{1}{T_g} = \sum_i \frac{w_i}{T_{g,i}} \qquad (4)$$

where w; is the weight fraction of monomer i and the $T_{g,i}$ is the glass transition temperature of monomer i.

The Flory-Fox Polymer Glass Transition Temperature was calculated using the provided glass transition temperatures according to the Flory Fox equation above, including the contribution from the crosslinker. The value of G" and tan(δ) are reported at each temperature and frequency following time-temperature superposition. The temperatures in each case are the reference temperatures for the superposition, and the G" and tan(δ) values as functions of frequency are directly retrieved from the master curve. The zero-shear viscosity and cross exponent were determined by fitting the master complex viscosity to a cross model in equation (5):

$$\eta^* = \frac{\eta_0}{(1+\omega\tau_0)^{1-a}} \qquad (5)$$

where $\eta^*$ is the complex viscosity, $\eta_0$ is the zero-shear viscosity, $\tau_0$ is a characteristic time, and "a" is the cross exponent.

The Polymer Flow Temperature was the temperature on heating for which tan(δ) ≥ 5 at for an angular frequency of 1 rad/s and beyond which the tan(δ) monotonically increased. It was determined from the master curve following time-temperature superposition of the frequency data captured by rheology as described above.

In the tables, "NM" means "not measured".

**Table 4A. Reagents and Reaction Conditions for Examples 1-7**

| **Synthetic Conditions** | | E1 | E2 | E3 | E4 | E5 | E6 | E7 |
|---|---|---|---|---|---|---|---|---|
| **Monomer, wt%** | LMA | 80.1 | 91.2 | 92.3 | 96.0 | 90.1 | 92.2 | 96.0 |
| | HPMA | 5.0 | 1.1 | - | - | 5.7 | - | - |
| | MAA | - | - | - | - | - | 3.5 | - |
| **Crosslinker** | Name | P3000 | P3000 | P3000 | P3000 | P3000 | P3000 | P3000 |
| | wt% | 14.9 | 7.8 | 7.7 | 4.0 | 4.2 | 4.3 | 4.0 |
| | Molar ratio [Crosslinker]/[Initiator] | 1.420 | 0.710 | 0.710 | 0.355 | 0.355 | 0.355 | 0.355 |
| **Polymer** | Total wt% | 100.0 | 100.0 | 100.0 | 100.0 | 100.0 | 100.0 | 100.0 |
| **Initiator** | ID | A | A | A | A | A | A | A |
| | Molar ratio [Monomer]/[-Initiator] | 100 | 100 | 100 | 100 | 100 | 100 | 100 |

(continued)

| Synthetic Conditions | | E1 | E2 | E3 | E4 | E5 | E6 | E7 |
|---|---|---|---|---|---|---|---|---|
| **Chain Transfer Agent (CTA)** | Molar ratio [CTA]/[Initiator] | 0.840 | 0.840 | 0.840 | 1.680 | 1.680 | 1.680 | 1.680 |
| **Reaction Solvent wt%** | Toluene | 60 | 60 | 60 | 60 | 60 | 60 | 60 |
| **Reaction Conditions** | Reaction Concentration (wt%) | 40 | 40 | 40 | 40 | 40 | 40 | 40 |
| | Reaction Process ID | 1 | 1 | 1 | 1 | 1 | 1 | 1 |
| | Process Class | A | A | A | A | A | A | A |
| | Reaction Gelled | Yes | Yes | Yes | No | No | No | No |

**Table 4B. Characterizations of the Polymer Product Examples 1-7**

| Molecular Characterization | | E1 | E2 | E3 | E4 | E5 | E6 | E7 |
|---|---|---|---|---|---|---|---|---|
| **GPC** | Mn (kg/mol) | NM | NM | NM | 32 | 37 | 27 | 28 |
| | Mw (kg/mol) | NM | NM | NM | 129 | 281 | 99 | 110 |
| | Mz (kg/mol) | NM | NM | NM | 372 | 1,010 | 245 | 299 |
| | PDI | NM | NM | NM | 4.0 | 7.6 | 3.7 | 3.9 |
| **$^1$H NMR** | Conversion (%) | NM | NM | NM | 95.0 | 97.0 | 98.0 | 96.0 |
| | Final Concentration (wt%) | NM | NM | NM | 38.0 | 38.8 | 39.2 | 38.4 |
| **Calculated** | Weight Average Monomer Solubility Parameter (MPa$^{1/2}$) | 17.3 | 17.0 | 16.9 | 16.8 | 17.2 | 17.2 | 16.8 |
| | Flory-Fox Monomer Glass Transition Temperature, $T_g$ (°C) | -60.0 | -64.1 | -65.0 | -65.0 | -60.0 | -60.5 | -65.0 |
| | Flory-Fox Polymer Glass Transition Temperature, $T_g$ (°C) | -58.0 | -62.7 | -63.6 | -64.3 | -59.4 | -59.9 | -64.3 |
| **20 °C Rheology** | Zero-shear Viscosity (Pa-s) | NM | NM | NM | 1,670 | 32,200 | 3,260,000 | 868 |
| | Cross Exponent | NM | NM | NM | 0.676 | 0.572 | 0.438 | 0.658 |
| | G" @ 0.1 rad/s (Pa) | NM | NM | NM | 114 | 1,420 | 39,400 | 108 |
| | G" @ 100 rad/s (Pa) | NM | NM | NM | 44,200 | 86,900 | 758,000 | 29,900 |
| | tan(δ) @ 0.1 rad/s | NM | NM | NM | 3.74 | 2.65 | 1.12 | 10.4 |
| | tan(δ) @ 100 rad/s | NM | NM | NM | 1.77 | 1.20 | 0.698 | 1.86 |

(continued)

| Molecular Characterization | | E1 | E2 | E3 | E4 | E5 | E6 | E7 |
|---|---|---|---|---|---|---|---|---|
| 110 °C Rheology | Zero-shear Viscosity (Pa-s) | NM | NM | NM | NM | NM | NM | NM |
| | Cross Exponent | NM | NM | NM | NM | NM | NM | NM |
| | G" @ 0.1 rad/s (Pa) | NM | NM | NM | NM | NM | NM | NM |
| | G" @ 100 rad/s (Pa) | NM | NM | NM | NM | NM | NM | NM |
| | tan(δ) @ 0.1 rad/s | NM | NM | NM | NM | NM | NM | NM |
| | tan(δ) @ 100 rad/s | NM | NM | NM | NM | NM | NM | NM |
| | Polymer Flow Temperature (°C) | NM | NM | NM | 17.4 | 57.5 | 72.8 | 10.1 |

**Table 5A. Reagents and Reaction Conditions for Examples 8-12, Comparative 1 and 2**

| Synthetic Conditions | | E8 | C1 | E9 | C2 | E10 | E11 | E12 |
|---|---|---|---|---|---|---|---|---|
| Monomer, wt% | AA | - | - | - | - | - | - | - |
| | LMA | 96.0 | 100.0 | 92.3 | 100.0 | 92.3 | 94.4 | 54.3 |
| | n-BMA | - | - | - | - | - | - | 30.3 |
| Crosslinker | Name | P3000 | - | P3000 | - | P3000 | P3000 | P3000 |
| | wt% | 4.0 | 0.0 | 7.7 | 0.0 | 7.7 | 5.6 | 15.4 |
| | Molar ratio [Crosslinker]/[Initiator] | 0.355 | 0.000 | 1.420 | 0.000 | 0.355 | 0.503 | 0.600 |
| Polymer | Total wt% | 100.0 | 100.0 | 100.0 | 100.0 | 100.0 | 100.0 | 100.0 |
| Initiator | ID | A | A | A | A | A | A | A |
| | Molar ratio [Monomer]/[Initiator] | 100 | 100 | 200 | 50 | 50 | 100 | 50 |
| Chain Transfer Agent (CTA) | Molar ratio [CTA]/[Initiator] | 1.680 | 1.680 | 1.680 | 0.840 | 0.420 | 1.680 | 1.680 |
| Reaction Solvent wt% | Toluene | 60 | 60 | 60 | 60 | 60 | 60 | 60 |
| Reaction Conditions | Reaction Concentration (wt%) | 40 | 40 | 40 | 40 | 40 | 40 | 40 |
| | Reaction Process ID | 2 | 2 | 2 | 2 | 2 | 2 | 3 |
| | Process Class | B | B | B | B | B | B | B |
| | Reaction Gelled | No | No | Yes | No | Yes | No | Yes |

**Table 5B. Characterizations of the Polymer Product Examples 8-12, Comparative 1 and 2**

| Molecular Characterization | | E8 | C1 | E9 | C2 | E10 | E11 | E12 |
|---|---|---|---|---|---|---|---|---|
| GPC | Mn (kg/mol) | 31 | 21 | NM | 17 | NM | 32 | NM |
| | Mw (kg/mol) | 155 | 50 | NM | 39 | NM | 380 | NM |
| | Mz (kg/mol) | 471 | 86 | NM | 68 | NM | 1480 | NM |
| | PDI | 5.0 | 2.4 | NM | 2.3 | NM | 11.9 | NM |

(continued)

| Molecular Characterization | | E8 | C1 | E9 | C2 | E10 | E11 | E12 |
|---|---|---|---|---|---|---|---|---|
| $^1$H NMR | Conversion (%) | 95.0 | 96.0 | NM | 97.6 | NM | 95.5 | NM |
| | Final Concentration (wt%) | 38.0 | 38.4 | NM | 39.0 | NM | 38.2 | NM |
| Calculated | Weight Average Monomer Solubility Parameter ($MPa^{1/2}$) | 16.8 | 16.8 | 16.9 | 16.8 | 16.9 | 16.9 | 17.3 |
| | Flory-Fox Monomer Glass Transition Temperature, $T_g$ (°C) | -65.0 | -65.0 | -65.0 | -65.0 | -65.0 | -65.0 | -40.9 |
| | Flory-Fox Polymer Glass Transition Temperature, $T_g$ (°C) | -64.3 | -65.0 | -63.6 | -65.0 | -63.6 | -64.0 | -41.7 |
| 20 °C Rheology | Zero-shear Viscosity (Pa-s) | 2,400 | 701 | NM | 141 | NM | 4,650 | NM |
| | Cross Exponent | 0.647 | 0.699 | NM | 0.717 | NM | 0.632 | NM |
| | G" @ 0.1 rad/s (Pa) | 228 | 88.1 | NM | 14.4 | NM | 358 | NM |
| | G" @ 100 rad/s (Pa) | 45,300 | 37,400 | NM | 11,900 | NM | 37,900 | NM |
| | tan(δ) @ 0.1 rad/s | 12.2 | 114 | NM | 19.1 | NM | 4.53 | NM |
| | tan(δ) @ 100 rad/s | 1.57 | 2.44 | NM | 4.88 | NM | 1.39 | NM |
| 110 °C Rheology | Zero-shear Viscosity (Pa-s) | NM | NM | NM | NM | NM | NM | NM |
| | Cross Exponent | NM | NM | NM | NM | NM | NM | NM |
| | G" @ 0.1 rad/s (Pa) | NM | NM | NM | NM | NM | NM | NM |
| | G" @ 100 rad/s (Pa) | NM | NM | NM | NM | NM | NM | NM |
| | tan(δ) @ 0.1 rad/s | NM | NM | NM | NM | NM | NM | NM |
| | tan(δ) @ 100 rad/s | NM | NM | NM | NM | NM | NM | NM |
| | Polymer Flow Temperature (°C) | 24.1 | 2.5 | NM | -13.1 | NM | 63.6 | NM |

**Table 6A. Reagents and Reaction Conditions for Examples 13-17, Comparative 3 and 4**

| Synthetic Conditions | | E13 | C3 | C4 | E14 | E15 | E16 | E17 |
|---|---|---|---|---|---|---|---|---|
| Monomer, wt% | LMA | 54.7 | 99.6 | 99.6 | 60.9 | 67.7 | 96.0 | 96.0 |
| | t-BMA | - | - | - | 34.0 | - | - | - |
| | MMA | - | - | - | - | 26.6 | - | - |
| | CHMA | 36.2 | - | - | - | - | - | - |
| Crosslinker | Name | P3000 | 1,6-hexyl | 1,6-hexyl | P3000 | P3000 | P3000 | P3000 |
| | wt% | 9.2 | 0.4 | 0.4 | 5.1 | 5.7 | 4.0 | 4.0 |
| | Molar ratio [Crosslinker]/[Initiator] | 0.355 | 0.355 | 0.355 | 0.178 | 0.178 | 0.355 | 0.355 |
| Polymer | Total wt% | 100.0 | 100.0 | 100.0 | 100.0 | 100.0 | 100.0 | 100.0 |
| Initiator | ID | A | A | A | A | A | A | A |
| | Molar ratio [Monomer]/[Initiator] | 50 | 100 | 100 | 50 | 50 | 100 | 100 |

(continued)

| Synthetic Conditions | | E13 | C3 | C4 | E14 | E15 | E16 | E17 |
|---|---|---|---|---|---|---|---|---|
| Chain Transfer Agent (CTA) | Molar ratio [CTA]/[Initiator] | 1.680 | 1.680 | 1.680 | 1.680 | 1.680 | 1.680 | 1.680 |
| Reaction Solvent wt% | Toluene | 60 | 60 | 60 | 60 | 60 | 60 | 60 |
| Reaction Conditions | Reaction Concentration (wt%) | 40 | 40 | 40 | 40 | 40 | 40 | 40 |
| | Reaction Process ID | 3 | 2 | 2 | 3 | 3 | 2 | 2 |
| | Process Class | B | B | B | B | B | B | B |
| | Reaction Gelled | No | No | No | No | No | No | No |

**Table 6B. Characterizations of the Polymer Product Examples 13-17, Comparative 3 and 4**

| Molecular Characterization | | E13 | C3 | C4 | E14 | E15 | E16 | E17 |
|---|---|---|---|---|---|---|---|---|
| GPC | Mn (kg/mol) | 21 | 24 | 25 | 16 | 15 | 28 | 31 |
| | Mw (kg/mol) | 148 | 55 | 56 | 49 | 46 | 127 | 131 |
| | Mz (kg/mol) | 500 | 100 | 103 | 110 | 104 | 373 | 377 |
| | PDI | 7.0 | 2.3 | 2.2 | 3.1 | 3.1 | 4.5 | 4.2 |
| $^1$H NMR | Conversion (%) | 97.5 | 95.8 | 95.9 | 98.4 | 97.5 | 95.7 | 95.1 |
| | Final Concentration (wt%) | 39.0 | 38.3 | 38.4 | 39.3 | 39.0 | 38.3 | 38.0 |
| Calculated | Weight Average Monomer Solubility Parameter (MPa$^{1/2}$) | 17.5 | 16.8 | 16.8 | 17.2 | 17.5 | 16.8 | 16.8 |
| | Flory-Fox Monomer Glass Transition Temperature, $T_g$ (°C) | -27.2 | -65.0 | -65.0 | -23.5 | -34.7 | -65.0 | -65.0 |
| | Flory-Fox Polymer Glass Transition Temperature, $T_g$ (°C) | -29.0 | NM | NM | -24.7 | -35.4 | -64.3 | -64.3 |
| 20 °C Rheology | Zero-shear Viscosity (Pa-s) | 2,670,000 | 259 | 142 | 6470 | 96,500 | 19,000 | 384 |
| | Cross Exponent | 0.641 | 0.706 | 0.704 | 0.644 | 0.641 | 0.653 | 0.660 |
| | G" @ 0.1 rad/s (Pa) | 38,300 | 29.7 | 14.7 | 490 | 7,010 | 157 | 37.6 |
| | G" @ 100 rad/s (Pa) | 4,739,510 | 17,699 | 10,819 | 130,443 | 770,570 | 43,531 | 16,238 |
| | tan(δ) @ 0.1 rad/s | 1.32 | 7.50 | 86.0 | 33.2 | 4.08 | 22.9 | 163 |
| | tan(δ) @ 100 rad/s | 1.34 | 3.20 | 3.81 | 1.67 | 1.92 | 1.65 | 2.10 |

(continued)

| Molecular Characterization | | E13 | C3 | C4 | E14 | E15 | E16 | E17 |
|---|---|---|---|---|---|---|---|---|
| **110 °C Rheology** | Zero-shear Viscosity (Pa-s) | NM | NM | NM | NM | NM | NM | NM |
| | Cross Exponent | NM | NM | NM | NM | NM | NM | NM |
| | G" @ 0.1 rad/s (Pa) | NM | NM | NM | NM | NM | NM | NM |
| | G" @ 100 rad/s (Pa) | NM | NM | NM | NM | NM | NM | NM |
| | tan(δ) @ 0.1 rad/s | NM | NM | NM | NM | NM | NM | NM |
| | tan(δ) @ 100 rad/s | NM | NM | NM | NM | NM | NM | NM |
| | Polymer Flow Temperature (°C) | 80.0 | -5.4 | -9.8 | 18.2 | 38.4 | 19.2 | 5.2 |

**Table 7A. Reagents and Reaction Conditions for Examples 18-23, Comparative 5**

| Synthetic Conditions | | E18 | E19 | E20 | E21 | E22 | C5 | E23 |
|---|---|---|---|---|---|---|---|---|
| **Monomer, wt%** | LMA | 60.9 | 46.7 | 96.0 | - | - | - | - |
| | MAA | - | - | - | - | - | - | 13.6 |
| | n-BMA | 34.0 | - | - | 53.9 | - | - | - |
| | MMA | - | - | - | 38.0 | 90.4 | 100.0 | - |
| | CHMA | - | 30.9 | - | - | - | - | 79.7 |
| | KMA | - | 18.5 | - | - | - | - | - |
| **Crosslinker** | Name | P3000 | P3000 | P3000 | P3000 | P3000 | - | P3000 |
| | wt% | 5.1 | 4.0 | 4.0 | 8.1 | 9.6 | 0.0 | 6.7 |
| | Molar ratio [Crosslinker]/[Initiator] | 0.178 | 0.178 | 0.355 | 0.178 | 0.178 | 0.000 | 0.178 |
| **Polymer** | Total wt% | 100.0 | 100.0 | 100.0 | 100.0 | 100.0 | 100.0 | 100.0 |
| **Initiator** | ID | A | A | A | A | A | A | A |
| | Molar ratio [Monomer]/[Initiator] | 50 | 50 | 100 | 50 | 50 | 100 | 50 |
| **Chain Transfer Agent (CTA)** | Molar ratio [CTA]/[Initiator] | 1.680 | 1.680 | 1.680 | 1.680 | 1.000 | 1.000 | 1.680 |
| **Reaction Solvent wt%** | Toluene | 60 | 60 | 60 | 60 | 60 | 60 | 60 |
| **Reaction Conditions** | Reaction Concentration (wt%) | 40 | 40 | 40 | 40 | 40 | 40 | 40 |
| | Reaction Process ID | 3 | 3 | 4 | 3 | 3 | 3 | 3 |
| | Process Class | B | B | C | B | B | B | B |
| | Reaction Gelled | No | No | No | No | No | No | Yes |

**Table 7B. Characterizations of the Polymer Product Examples 18-23, Comparative 5**

| Molecular Characterization | | E18 | E19 | E20 | E21 | E22 | C5 | E23 |
|---|---|---|---|---|---|---|---|---|
| GPC | Mn (kg/mol) | 15 | 18 | 23 | 11 | 13 | 14 | NM |
| | Mw (kg/mol) | 44 | 50 | 64 | 31 | 48 | 27 | NM |
| | Mz (kg/mol) | 93 | 105 | 141 | 66 | 123 | 43 | NM |
| | PDI | 2.9 | 2.8 | 2.8 | 2.8 | 3.7 | 1.9 | NM |
| $^1$H NMR | Conversion (%) | 97.3 | 96.1 | 95.4 | 98.2 | 99.0 | 99.0 | NM |
| | Final Concentration (wt%) | 38.9 | 38.5 | 38.1 | 39.3 | 39.6 | 39.6 | NM |
| Calculated | Weight Average Monomer Solubility Parameter ($MPa^{1/2}$) | 17.2 | 17.6 | 16.8 | 18.3 | 18.9 | 19.0 | 19.6 |
| | Flory-Fox Monomer Glass Transition Temperature, $T_g$ (°C) | -40.9 | -33.6 | -65.0 | 50.0 | 105.0 | 105.0 | 82.8 |
| | Flory-Fox Polymer Glass Transition Temperature, $T_g$ (°C) | -41.1 | -34.1 | -64.3 | 39.3 | 82.2 | 105.0 | 69.7 |
| 20 °C Rheology | Zero-shear Viscosity (Pa-s) | NM | NM | 505 | NM | NM | NM | NM |
| | Cross Exponent | NM | NM | 0.683 | NM | NM | NM | NM |
| | G" @ 0.1 rad/s (Pa) | NM | NM | 48.9 | NM | NM | NM | NM |
| | G" @ 100 rad/s (Pa) | NM | NM | 25,905 | NM | NM | NM | NM |
| | tan(δ) @ 0.1 rad/s | NM | NM | 48.4 | NM | NM | NM | NM |
| | tan(δ) @ 100 rad/s | NM | NM | 2.35 | NM | NM | NM | NM |
| 110 °C Rheology | Zero-shear Viscosity (Pa-s) | NM | NM | NM | NM | NM | 5,781,884 | NM |
| | Cross Exponent | NM | NM | NM | NM | NM | 0.536 | NM |
| | G" @ 0.1 rad/s (Pa) | NM | NM | NM | NM | 24,784 | 36,035 | NM |
| | G" @ 100 rad/s (Pa) | NM | NM | NM | NM | 1,111,110 | 1,878,240 | NM |
| | tan(δ) @ 0.1 rad/s | NM | NM | NM | NM | 0.950 | 1.40 | NM |
| | tan(δ) @ 100 rad/s | NM | NM | NM | NM | 1.40 | 0.939 | NM |
| | Polymer Flow Temperature (°C) | NM | NM | 1.4 | NM | NM | 167.3 | NM |

**Table 8A. Reagents and Reaction Conditions for Examples 24-30**

| Synthetic Conditions | | E24 | E25 | E26 | E27 | E28 | E29 | E30 |
|---|---|---|---|---|---|---|---|---|
| Monomer, wt% | **LMA** | - | 30.2 | 46.4 | 46.4 | 27.9 | 43.2 | 31.6 |
| | **HPMA** | - | - | - | - | - | 17.5 | - |
| | **MAA** | - | 10.2 | 15.7 | 15.7 | - | - | 13.3 |
| | **n-BMA** | 55.4 | 50.7 | - | - | 46.8 | - | 48.5 |
| | **MMA** | 39.0 | - | - | - | - | - | - |
| | **BzMA** | - | - | 32.1 | 32.1 | 19.4 | 34.2 | - |

(continued)

| Synthetic Conditions | | E24 | E25 | E26 | E27 | E28 | E29 | E30 |
|---|---|---|---|---|---|---|---|---|
| Crosslinker | Name | P2000 | P3000 | P3000 | P3000 | P3000 | P3000 | P3000 |
| | wt% | 5.6 | 8.9 | 5.8 | 5.8 | 5.9 | 5.2 | 6.6 |
| | Molar ratio [Crosslinker]/[Initiator] | 0.178 | 1.000 | 0.355 | 0.355 | 0.178 | 0.355 | 0.355 |
| Polymer | Total wt% | 100.0 | 100.0 | 100.0 | 100.0 | 100.0 | 100.0 | 100.0 |
| Initiator | ID | A | A | A | A | A | A | A |
| | Molar ratio [Monomer]/[Initiator] | 50 | 200 | 100 | 100 | 50 | 100 | 100 |
| Chain Transfer Agent (CTA) | Molar ratio [CTA]/[Initiator] | 1.680 | 4.000 | 1.680 | 1.680 | 1.680 | 1.680 | 1.680 |
| Reaction Solvent wt% | Toluene | 60 | 60 | 60 | 60 | 60 | 60 | 60 |
| Reaction Conditions | Reaction Concentration (wt%) | 40 | 40 | 40 | 40 | 40 | 40 | 40 |
| | Reaction Process ID | 3 | 3 | 3 | 5 | 3 | 6 | 6 |
| | Process Class | B | B | B | D | B | E | E |
| | Reaction Gelled | No | Yes | Yes | Yes | No | No | Yes |

**Table 8B. Characterizations of the Polymer Product Examples 24-30**

| Molecular Characterization | | E24 | E25 | E26 | E27 | E28 | E29 | E30 |
|---|---|---|---|---|---|---|---|---|
| GPC | Mn (kg/mol) | 10 | NM | NM | NM | 11 | 35 | NM |
| | Mw (kg/mol) | 24 | NM | NM | NM | 29 | 478 | NM |
| | Mz (kg/mol) | 46 | NM | NM | NM | 62 | 1953 | NM |
| | PDI | 2.4 | NM | NM | NM | 2.6 | 13.7 | NM |
| $^1$H NMR | Conversion (%) | 97.3 | NM | NM | NM | 97.3 | 97.1 | NM |
| | Final Concentration (wt%) | 38.9 | NM | NM | NM | 38.9 | 38.8 | NM |
| Calculated | Weight Average Monomer Solubility Parameter ($MPa^{1/2}$) | 18.3 | 18.5 | 19.6 | 19.6 | 18.1 | 19.0 | 18.7 |
| | Flory-Fox Monomer Glass Transition Temperature, $T_g$ (°C) | 50.0 | -3.9 | -5.6 | -5.6 | -6.5 | -11.3 | -1.4 |
| | Flory-Fox Polymer Glass Transition Temperature, $T_g$ (°C) | 41.9 | -8.3 | -8.3 | -8.3 | -9.2 | -13.4 | -4.9 |
| 20 °C Rheology | Zero-shear Viscosity (Pa-s) | NM | NM | NM | NM | 659,688 | NM | NM |
| | Cross Exponent | NM | NM | NM | NM | 0.667 | NM | NM |
| | G" @ 0.1 rad/s (Pa) | NM | NM | NM | NM | 17,572 | NM | NM |
| | G" @ 100 rad/s (Pa) | NM | NM | NM | NM | 4,707,000 | NM | NM |
| | tan(δ) @ 0.1 rad/s | NM | NM | NM | NM | 2.52 | NM | NM |
| | tan(δ) @ 100 rad/s | NM | NM | NM | NM | 1.55 | NM | NM |

(continued)

| Molecular Characterization | | E24 | E25 | E26 | E27 | E28 | E29 | E30 |
|---|---|---|---|---|---|---|---|---|
| 110 °C Rheology | Zero-shear Viscosity (Pa-s) | NM | NM | NM | NM | NM | NM | NM |
| | Cross Exponent | NM | NM | NM | NM | NM | NM | NM |
| | G" @ 0.1 rad/s (Pa) | NM | NM | NM | NM | NM | NM | NM |
| | G" @ 100 rad/s (Pa) | NM | NM | NM | NM | NM | NM | NM |
| | tan(δ) @ 0.1 rad/s | NM | NM | NM | NM | NM | NM | NM |
| | tan(δ) @ 100 rad/s | NM | NM | NM | NM | NM | NM | NM |
| | Polymer Flow Temperature (°C) | NM | NM | NM | NM | 41.4 | NM | NM |

**Table 9A. Reagents and Reaction Conditions for Examples 31-37**

| Synthetic Conditions | | E31 | E32 | E33 | E34 | E35 | E36 | E37 |
|---|---|---|---|---|---|---|---|---|
| Monomer, wt% | LMA | 46.1 | 37.7 | 63.1 | 30.6 | 42.0 | - | 30.5 |
| | HPMA | - | - | 7.2 | - | - | 9.6 | - |
| | MAA | - | 5.4 | - | - | - | - | - |
| | n-BMA | - | 50.6 | - | - | 20.1 | 47.2 | 51.1 |
| | t-BMA | - | - | 28.2 | 51.3 | - | - | - |
| | MMA | - | - | - | 12.0 | - | 13.3 | 12.0 |
| | CHMA | 30.5 | - | - | - | 23.8 | - | - |
| | BzMA | - | - | - | - | - | 23.4 | - |
| | 2-PEMA | 18.7 | - | - | - | - | - | - |
| | PEGMA | - | - | - | - | 7.1 | - | - |
| Crosslinker | Name | P3000 | P3000 | LP3000 | P2000 | P3000 | P2000 | P3000 |
| | wt% | 4.8 | 6.3 | 1.5 | 6.0 | 7.1 | 6.6 | 6.4 |
| | Molar ratio [Crosslinker]/[Initiator] | 0.355 | 0.354 | 0.100 | 0.500 | 0.500 | 0.500 | 0.355 |
| Polymer | Total wt% | 100.0 | 100.0 | 100.0 | 100.0 | 100.0 | 100.0 | 100.0 |
| Initiator | ID | A | A | A | A | A | A | A |
| | Molar ratio [Monomer]/[Initiator] | 100 | 95 | 100 | 100 | 100 | 100 | 100 |
| Chain Transfer Agent (CTA) | Molar ratio [CTA]/[Initiator] | 1.680 | 3.988 | 1.680 | 1.680 | 1.680 | 1.680 | 1.680 |
| Reaction Solvent wt% | Toluene | 60 | 60 | 60 | 60 | 60 | 60 | 50 |
| Reaction Conditions | Reaction Concentration (wt%) | 40 | 40 | 40 | 40 | 40 | 40 | 50 |
| | Reaction Process ID | 3 | 7 | 8 | 3 | 3 | 7 | 3 |
| | Process Class | B | C | A | B | B | C | B |
| | Reaction Gelled | No | No | No | No | No | No | No |

**Table 9B. Characterizations of the Polymer Product Examples 31-37**

| Molecular Characterization | | E31 | E32 | E33 | E34 | E35 | E36 | E37 |
|---|---|---|---|---|---|---|---|---|
| GPC | Mn (kg/mol) | 27 | 15 | 20 | 22 | 29 | 27 | 30 |
| | Mw (kg/mol) | 133 | 37 | 43 | 90 | 278 | 137 | 165 |
| | Mz (kg/mol) | 403 | 74 | 73 | 244 | 1072 | 457 | 574 |
| | PDI | 4.9 | 2.5 | 2.2 | 4.1 | 9.6 | 5.1 | 5.5 |
| $^1H$ NMR | Conversion (%) | 96.8 | 97.6 | 95.0 | 88.6 | 96.5 | 87.7 | 97.8 |
| | Final Concentration (wt%) | 38.7 | 39.0 | 38.0 | 35.4 | 38.6 | 35.1 | 48.9 |
| Calculated | Weight Average Monomer Solubility Parameter ($MPa^{1/2}$) | 18.2 | 18.0 | 17.4 | 17.6 | 17.8 | 19.0 | 17.7 |
| | Flory-Fox Monomer Glass Transition Temperature, $T_g$ (°C) | -14.6 | -16.2 | -24.8 | 28.9 | -23.8 | 43.5 | -7.7 |
| | Flory-Fox Polymer Glass Transition Temperature, $T_g$ (°C) | -16.3 | -18.3 | -25.1 | 22.4 | -25.5 | 34.6 | -10.5 |
| 20 °C Rheology | Zero-shear Viscosity (Pa-s) | NM | NM | NM | NM | NM | NM | NM |
| | Cross Exponent | NM | NM | NM | NM | NM | NM | NM |
| | G" @ 0.1 rad/s (Pa) | NM | NM | NM | NM | NM | NM | NM |
| | G" @ 100 rad/s (Pa) | NM | NM | NM | NM | NM | NM | NM |
| | tan(δ) @ 0.1 rad/s | NM | NM | NM | NM | NM | NM | NM |
| | tan(δ) @ 100 rad/s | NM | NM | NM | NM | NM | NM | NM |
| 110 °C Rheology | Zero-shear Viscosity (Pa-s) | NM | 204 | NM | 6,656 | NM | 101,273 | 192 |
| | Cross Exponent | NM | 0.546 | NM | 0.639 | NM | 0.468 | 0.518 |
| | G" @ 0.1 rad/s (Pa) | NM | NM | NM | 833 | NM | 4,756 | 29.6 |
| | G" @ 100 rad/s (Pa) | NM | 12,500 | NM | 106,421 | NM | 131,581 | 9,156 |
| | tan(δ) @ 0.1 rad/s | NM | NM | NM | 9.64 | NM | 2.95 | 15.3 |
| | tan(δ) @ 100 rad/s | NM | 2.74 | NM | 1.47 | NM | 0.808 | 2.18 |
| | Polymer Flow Temperature (°C) | NM | 26.4 | NM | 116.0 | NM | 136.7 | 91.2 |

**Table 10A. Reagents and Reaction Conditions for Examples 38-44**

| Synthetic Conditions | | E38 | E39 | E40 | E41 | E42 | E43 | E44 |
|---|---|---|---|---|---|---|---|---|
| Monomer, wt% | LMA | 30.5 | - | 30.5 | 29.4 | 48.1 | 46.1 | 45.0 |
| | HPMA | - | 9.3 | - | - | 13.6 | - | - |
| | 2-HEMA | - | - | - | - | - | - | 6.6 |
| | 2-HEA | - | - | - | - | - | 7.0 | - |
| | n-BMA | 51.1 | 45.6 | 51.1 | 49.4 | - | 25.8 | 25.2 |
| | MMA | 12.0 | 12.9 | 12.0 | 11.6 | - | 18.1 | - |
| | BzMA | - | 22.6 | - | - | 33.3 | - | 17.8 |

(continued)

| Synthetic Conditions | | E38 | E39 | E40 | E41 | E42 | E43 | E44 |
|---|---|---|---|---|---|---|---|---|
| Crosslinker | Name | P3000 | P3000 | P3000 | P3000 | P3000 | F3000 | P3000 |
| | wt% | 6.4 | 9.6 | 6.4 | 9.6 | 5.0 | 3.0 | 5.4 |
| | Molar ratio [Crosslinker]/[Initiator] | 0.355 | 0.500 | 0.355 | 0.555 | 0.355 | 0.165 | 0.355 |
| Polymer | Total wt% | 100.0 | 100.0 | 100.0 | 100.0 | 100.0 | 100.0 | 100.0 |
| Initiator | ID | A | B | A | A | B | A | A |
| | Molar ratio [Monomer]/[Initiator] | 100 | 100 | 100 | 100 | 100 | 100 | 100 |
| Chain Transfer Agent (CTA) | Molar ratio [CTA]/[Initiator] | 1.680 | 1.680 | 1.075 | 1.680 | 1.680 | 1.680 | 1.000 |
| Reaction Solvent wt% | Toluene | 30 | 60 | 50 | 50 | 60 | 60 | 50 |
| Reaction Conditions | Reaction Concentration (wt%) | 70 | 40 | 50 | 50 | 40 | 40 | 50 |
| | Reaction Process ID | 3 | 9 | 3 | 3 | 9 | 7 | 3 |
| | Process Class | B | C | B | B | C | C | B |
| | Reaction Gelled | Yes | No | No | No | No | No | No |

**Table 10B. Characterizations of the Polymer Product Examples 38-44**

| Molecular Characterization | | E38 | E39 | E40 | E41 | E42 | E43 | E44 |
|---|---|---|---|---|---|---|---|---|
| GPC | Mn (kg/mol) | NM | 26 | 47 | 27 | 33 | 24 | 41 |
| | Mw (kg/mol) | NM | 339 | 425 | 357 | 251 | 35 | 324 |
| | Mz (kg/mol) | NM | 1813 | 1672 | 1558 | 910 | 50 | 1239 |
| | PDI | NM | 13.0 | 9.0 | 13.2 | 7.6 | 1.5 | 7.9 |
| $^{1}$H NMR | Conversion (%) | NM | 87.6 | 96.5 | 97.8 | 88.6 | 96.9 | 94.3 |
| | Final Concentration (wt%) | NM | 35.0 | 48.3 | 48.9 | 35.4 | 38.8 | 47.1 |
| Calculated | Weight Average Monomer Solubility Parameter ($MPa^{1/2}$) | 17.7 | 19.0 | 17.7 | 17.7 | 18.8 | 18.1 | 18.2 |
| | Flory-Fox Monomer Glass Transition Temperature, $T_g$ (°C) | -7.7 | 43.5 | -7.7 | -7.7 | -17.7 | -20.8 | -20.2 |
| | Flory-Fox Polymer Glass Transition Temperature, $T_g$ (°C) | -10.5 | 31.9 | -10.5 | -11.9 | -19.3 | -22.4 | -21.8 |
| 20 °C Rheology | Zero-shear Viscosity (Pa-s) | NM | NM | NM | NM | NM | NM | NM |
| | Cross Exponent | NM | NM | NM | NM | NM | NM | NM |
| | G" @ 0.1 rad/s (Pa) | NM | NM | NM | NM | NM | NM | NM |
| | G" @ 100 rad/s (Pa) | NM | NM | NM | NM | NM | NM | NM |
| | tan(δ) @ 0.1 rad/s | NM | NM | NM | NM | NM | NM | NM |
| | tan(δ) @ 100 rad/s | NM | NM | NM | NM | NM | NM | NM |

(continued)

| Molecular Characterization | | E38 | E39 | E40 | E41 | E42 | E43 | E44 |
|---|---|---|---|---|---|---|---|---|
| **110 °C Rheology** | Zero-shear Viscosity (Pa-s) | NM | NM | NM | NM | NM | NM | 392 |
| | Cross Exponent | NM | NM | NM | NM | NM | NM | 0.538 |
| | G" @ 0.1 rad/s (Pa) | NM | 3,242 | NM | NM | NM | NM | 26.1 |
| | G" @ 100 rad/s (Pa) | NM | 43,437 | NM | NM | NM | NM | 9,265 |
| | tan(δ) @ 0.1 rad/s | NM | 0.690 | NM | NM | NM | NM | 5.32 |
| | tan(δ) @ 100 rad/s | NM | 0.646 | NM | NM | NM | NM | 1.68 |
| | **Polymer Flow Temperature (°C)** | NM | NM | NM | NM | NM | NM | 104.3 |

**Table 11A. Reagents and Reaction Conditions for Examples 45-50, Comparative 6**

| Synthetic Conditions | | E45 | C6 | E46 | E47 | E48 | E49 | E50 |
|---|---|---|---|---|---|---|---|---|
| **Monomer, wt%** | n-BA | - | - | - | - | - | 43.9 | 43.9 |
| | BzA | - | - | - | - | - | 22.2 | 22.2 |
| | LMA | 46.1 | - | 31.6 | 31.6 | 31.6 | - | - |
| | HPMA | - | 10.2 | - | - | - | 9.9 | 9.9 |
| | 2-HEA | 7.0 | - | - | - | - | - | - |
| | MAA | - | - | 13.3 | 13.3 | 13.3 | - | - |
| | n-BMA | 25.8 | 50.5 | 48.5 | 48.5 | 48.5 | - | - |
| | MMA | 18.1 | 14.2 | - | - | - | 13.7 | 13.7 |
| | BzMA | - | 25.0 | - | - | - | - | - |
| **Crosslinker** | Name | F3000 | - | P3000 | P3000 | P3000 | F3000 | LP3000 |
| | wt% | 3.0 | 0.0 | 6.6 | 6.6 | 6.6 | 10.3 | 10.3 |
| | Molar ratio [Crosslinker]/[Initiator] | 0.165 | 0.000 | 0.355 | 0.355 | 0.355 | 0.500 | 0.500 |
| **Polymer** | Total wt% | 100.0 | 100.0 | 100.0 | 100.0 | 100.0 | 100.0 | 100.0 |
| **Initiator** | ID | B | A | B | B | B | B | B |
| | Molar ratio [Monomer]/[Initiator] | 100 | 100 | 100 | 100 | 100 | 100 | 100 |
| **Chain Transfer Agent (CTA)** | Molar ratio [CTA]/[Initiator] | 1.680 | 1.680 | 1.680 | 1.680 | 1.680 | 1.680 | 1.680 |
| **Reaction Solvent wt%** | Toluene | 60 | 60 | - | - | - | 50 | 50 |
| | Ethyl Acetate | - | - | 60 | - | - | - | - |
| | 2-butanone | - | - | - | 60 | - | - | - |
| | 2-butanol | - | - | - | - | 60 | - | - |
| **Reaction Conditions** | Reaction Concentration (wt%) | 40 | 40 | 40 | 40 | 40 | 50 | 50 |
| | Reaction Process ID | 10 | 7 | 10 | 10 | 10 | 9 | 9 |
| | Process Class | B | C | B | B | B | C | C |
| | Reaction Gelled | No | No | No | No | No | Yes | Yes |

**Table 11B. Characterizations of the Polymer Product Examples 45-50, Comparative 6**

| Molecular Characterization | | E45 | C6 | E46 | E47 | E48 | E49 | E50 |
|---|---|---|---|---|---|---|---|---|
| GPC | Mn (kg/mol) | 21 | 26 | 28 | 23 | 31 | NM | NM |
| | Mw (kg/mol) | 51 | 44 | 118 | 95 | 182 | NM | NM |
| | Mz (kg/mol) | 101 | 67 | 352 | 259 | 639 | NM | NM |
| | PDI | 2.4 | 1.7 | 4.2 | 4.1 | 5.9 | NM | NM |
| $^1$H NMR | Conversion (%) | 96.1 | 94.2 | 99.7 | 99.1 | 99.0 | NM | NM |
| | Final Concentration (wt%) | 38.4 | 37.7 | 39.9 | 39.6 | 39.6 | NM | NM |
| Calculated | Weight Average Monomer Solubility Parameter ($MPa^{1/2}$) | 18.1 | 19.1 | 18.7 | 18.7 | 18.7 | 19.3 | 19.1 |
| | Flory-Fox Monomer Glass Transition Temperature, $T_g$ (°C) | -20.8 | 43.5 | -1.4 | -1.4 | -1.4 | 0.9 | 0.9 |
| | Flory-Fox Polymer Glass Transition Temperature, $T_g$ (°C) | -22.4 | 43.5 | -4.9 | -4.9 | -4.9 | -7.8 | -4.0 |
| 20 °C Rheology | Zero-shear Viscosity (Pa-s) | NM | NM | NM | NM | NM | NM | NM |
| | Cross Exponent | NM | NM | NM | NM | NM | NM | NM |
| | G" @ 0.1 rad/s (Pa) | NM | NM | NM | NM | NM | NM | NM |
| | G" @ 100 rad/s (Pa) | NM | NM | NM | NM | NM | NM | NM |
| | tan(δ) @ 0.1 rad/s | NM | NM | NM | NM | NM | NM | NM |
| | tan(δ) @ 100 rad/s | NM | NM | NM | NM | NM | NM | NM |
| 110 °C Rheology | Zero-shear Viscosity (Pa-s) | NM | 21,499 | 430,049 | 183,362 | 516,216 | NM | NM |
| | Cross Exponent | NM | 0.527 | 0.533 | 0.542 | 0.527 | NM | NM |
| | G" @ 0.1 rad/s (Pa) | NM | 1,593 | 18,272 | 10,849 | 15,920 | NM | NM |
| | G" @ 100 rad/s (Pa) | NM | 146,015 | 651,734 | 44,222 | 550,408 | NM | NM |
| | tan(δ) @ 0.1 rad/s | NM | 9.93 | 1.75 | 2.19 | 1.50 | NM | NM |
| | tan(δ) @ 100 rad/s | NM | 0.986 | 0.953 | 1.39 | 1.01 | NM | NM |
| | Polymer Flow Temperature (°C) | NM | 119.0 | 160.5 | 150.4 | 179.3 | NM | NM |

**Table 12A. Reagents and Reaction Conditions for Examples 51-57**

| Synthetic Conditions | | E51 | E52 | E53 | E54 | E55 | E56 | E57 |
|---|---|---|---|---|---|---|---|---|
| Monomer, wt% | LA | - | - | - | - | - | - | 39.8 |
| | LMA | 30.5 | 30.5 | 30.5 | 48.1 | 40.5 | 40.5 | - |
| | HPMA | - | - | - | 13.6 | - | - | - |
| | MAA | - | - | - | - | 4.6 | 4.6 | 4.8 |
| | n-BMA | 51.1 | 51.1 | 51.1 | - | 45.3 | 45.3 | |
| | t-BMA | - | - | - | - | - | - | 47.1 |
| | MMA | 12.0 | 12.0 | 12.0 | - | - | - | - |
| | BzMA | - | - | - | 33.3 | - | - | - |
| Crosslinker | Name | P3000 | P3000 | P3000 | P3000 | P3000 | P3000 | P3000 |
| | wt% | 6.4 | 6.4 | 6.4 | 5.0 | 9.6 | 9.6 | 8.3 |
| | Molar ratio [Crosslinker]/[Initiator] | 0.355 | 0.355 | 0.355 | 0.355 | 0.600 | 0.600 | 0.500 |
| Polymer | Total wt% | 100.0 | 100.0 | 100.0 | 100.0 | 100.0 | 100.0 | 100.0 |
| Initiator | ID | B | B | B | B | B | B | B |
| | Molar ratio [Monomer]/[Initiator] | 100 | 100 | 100 | 100 | 100 | 100 | 100 |
| Chain Transfer Agent (CTA) | Molar ratio [CTA]/[Initiator] | 1.680 | 1.680 | 1.680 | 1.680 | 3.000 | 3.000 | 1.680 |
| Reaction Solvent wt% | Toluene | 40 | - | - | 60 | - | - | - |
| | Ethyl Acetate | - | - | - | - | 60 | 60 | - |
| | 2-butanone | - | 40 | - | - | - | - | 50 |
| | 2-butanol | - | - | 40 | - | - | - | - |
| Reaction Conditions | Reaction Concentration (wt%) | 60 | 60 | 60 | 40 | 40 | 40 | 50 |
| | Reaction Process ID | 10 | 10 | 10 | 9 | 9 | 9 | 9 |
| | Process Class | B | B | B | C | C | C | C |
| | Reaction Gelled | No | No | No | No | No | No | No |

**Table 12B. Characterizations of the Polymer Product Examples 51-57**

| Molecular Characterization | | E51 | E52 | E53 | E54 | E55 | E56 | E57 |
|---|---|---|---|---|---|---|---|---|
| GPC | Mn (kg/mol) | 20 | 27 | 33 | 32 | 21 | 21 | 29 |
| | Mw (kg/mol) | 81 | 160 | 141 | 218 | 167 | 161 | 376 |
| | Mz (kg/mol) | 235 | 570 | 454 | 771 | 653 | 616 | 1649 |
| | PDI | 4.1 | 5.9 | 4.3 | 6.8 | 8.0 | 7.7 | 13.0 |
| $^{1}H$ NMR | Conversion (%) | 99.4 | 99.6 | 99.7 | 99.0 | 99.3 | 99.3 | 98.3 |
| | Final Concentration (wt%) | 59.6 | 59.8 | 59.8 | 39.6 | 39.7 | 39.7 | 49.1 |

(continued)

| Molecular Characterization | | E51 | E52 | E53 | E54 | E55 | E56 | E57 |
|---|---|---|---|---|---|---|---|---|
| Calculated | Weight Average Monomer Solubility Parameter ($MPa^{1/2}$) | 17.7 | 17.7 | 17.7 | 18.8 | 17.9 | 17.9 | 18.2 |
| | Flory-Fox Monomer Glass Transition Temperature, $T_g$ (°C) | -7.7 | -7.7 | -7.7 | -17.7 | -20.9 | -20.9 | 76.5 |
| | Flory-Fox Polymer Glass Transition Temperature, $T_g$ (°C) | -10.5 | -10.5 | -10.5 | -19.3 | -23.5 | -23.5 | 61.5 |
| **20** °C **Rheology** | Zero-shear Viscosity (Pa-s) | NM | NM | NM | NM | NM | NM | NM |
| | Cross Exponent | NM | NM | NM | NM | NM | NM | NM |
| | G" @ 0.1 rad/s (Pa) | NM | NM | NM | NM | NM | NM | NM |
| | G" @ 100 rad/s (Pa) | NM | NM | NM | NM | NM | NM | NM |
| | tan(δ) @ 0.1 rad/s | NM | NM | NM | NM | NM | NM | NM |
| | tan(δ) @ 100 rad/s | NM | NM | NM | NM | NM | NM | NM |
| **110 °C Rheology** | Zero-shear Viscosity (Pa-s) | 61 | 542 | 350 | NM | NM | NM | NM |
| | Cross Exponent | 0.586 | 0.495 | 0.513 | NM | NM | NM | NM |
| | G" @ 0.1 rad/s (Pa) | 10.1 | 59.1 | 40.2 | NM | NM | NM | 307 |
| | G" @ 100 rad/s (Pa) | 3,791 | 17,108 | 13,346 | NM | NM | NM | 11,918 |
| | tan(δ) @ 0.1 rad/s | 4.69 | 25.3 | 14.9 | NM | NM | NM | 1.37 |
| | tan(δ) @ 100 rad/s | 3.44 | 1.68 | 1.88 | NM | NM | NM | 0.972 |
| | Polymer Flow Temperature (°C) | 72.3 | 95.4 | 95.4 | NM | NM | NM | NM |

**Table 13A. Reagents and Reaction Conditions for Examples 58-62, Comparatives 7 and 8**

| Synthetic Conditions | | E58 | E59 | E60 | E61 | C7 | E62 | C8 |
|---|---|---|---|---|---|---|---|---|
| **Monomer wt%** | LA | 59.5 | - | - | - | - | - | - |
| | AA | - | - | 11.1 | - | 4.5 | 4.1 | - |
| | HPMA | - | 41.9 | - | - | - | - | 10.1 |
| | 2-HEA | 9.6 | 25.3 | - | - | - | - | - |
| | MAA | - | - | 13.3 | - | - | - | - |
| | n-BMA | - | - | - | - | - | - | 50.1 |
| | MMA | - | 21.8 | 23.2 | 31.5 | - | - | 14.1 |
| | CHMA | - | - | - | - | 62.7 | 57.3 | - |
| | BzMA | - | - | 40.8 | 33.2 | 32.8 | 30.0 | 24.8 |
| | 2-PEMA | - | - | - | 25.9 | - | - | - |
| | PEGMA | 24.7 | - | - | - | - | - | - |
| **Crosslinker** | Name | P3000 | P3000 | P3000 | P3000 | - | P3000 | 1,6-hexyl |
| | wt% | 6.2 | 10.9 | 11.6 | 9.4 | 0.0 | 8.5 | 0.9 |
| | Molar ratio [Crosslinker]/[Initiator] | 0.500 | 0.500 | 0.500 | 0.500 | 0.000 | 0.500 | 0.500 |

(continued)

| Synthetic Conditions | | E58 | E59 | E60 | E61 | C7 | E62 | C8 |
|---|---|---|---|---|---|---|---|---|
| **Polymer** | Total wt% | 100.0 | 100.0 | 100.0 | 100.0 | 100.0 | 100.0 | 100.0 |
| **Initiator** | ID | B | B | B | B | B | B | B |
| | Molar ratio [Monomer]/[Initiator] | 100 | 100 | 100 | 100 | 150 | 100 | 100 |
| **Chain Transfer Agent (CTA)** | Molar ratio [CTA]/[Initiator] | 1.680 | 1.680 | 1.680 | 1.680 | 1.680 | 1.680 | 1.680 |
| **Reaction Solvent wt%** | Toluene | 20 | 17 | 17 | 18 | - | 22 | 60 |
| | 2-butanone | - | - | - | - | 50 | - | - |
| | 2-butanol | 30 | 33 | 33 | 32 | - | 38 | - |
| **Reaction Conditions** | Reaction Concentration (wt%) | 50 | 50 | 50 | 50 | 50 | 50 | 40 |
| | Reaction Process ID | 11 | 11 | 11 | 11 | 10 | 11 | 9 |
| | Process Class | A | A | A | A | B | A | C |
| | Reaction Gelled | No | Yes | Yes | No | No | No | No |

**Table 13B. Characterizations of the Polymer Product Examples 58-62, Comparatives 7 and 8**

| Molecular Characterization | | E58 | E59 | E60 | E61 | C7 | E62 | C8 |
|---|---|---|---|---|---|---|---|---|
| **GPC** | Mn (kg/mol) | 18 | NM | NM | 25 | 21 | 22 | 20 |
| | Mw (kg/mol) | 65 | NM | NM | 114 | 49 | 118 | 59 |
| | Mz (kg/mol) | 165 | NM | NM | 460 | 83 | 770 | 137 |
| | PDI | 3.6 | NM | NM | 4.6 | 2.3 | 5.4 | 3.0 |
| **$^1$H NMR** | Conversion (%) | 99.7 | NM | NM | 99.9 | 99.7 | 99.7 | 98.6 |
| | Final Concentration (wt%) | 49.8 | NM | NM | 49.9 | 49.8 | 49.8 | 39.4 |
| **Calculated** | Weight Average Monomer Solubility Parameter ($MPa^{1/2}$) | 19.1 | 22.0 | 20.7 | 19.9 | 19.2 | 19.1 | 19.1 |
| | Flory-Fox Monomer Glass Transition Temperature, $T_g$ (°C) | -2.5 | 48.5 | 92.3 | 70.5 | 63.7 | 63.7 | 43.5 |
| | Flory-Fox Polymer Glass Transition Temperature, $T_g$ (°C) | -5.7 | 34.6 | 68.2 | 54.6 | 63.7 | 50.4 | NC |
| **20 °C Rheology** | Zero-shear Viscosity (Pa-s) | NM | NM | NM | NM | NM | NM | NM |
| | Cross Exponent | NM | NM | NM | NM | NM | NM | NM |
| | G" @ 0.1 rad/s (Pa) | NM | NM | NM | NM | NM | NM | NM |
| | G" @ 100 rad/s (Pa) | NM | NM | NM | NM | NM | NM | NM |
| | tan(δ) @ 0.1 rad/s | NM | NM | NM | NM | NM | NM | NM |
| | tan(δ) @ 100 rad/s | NM | NM | NM | NM | NM | NM | NM |

(continued)

| Molecular Characterization | | E58 | E59 | E60 | E61 | C7 | E62 | C8 |
|---|---|---|---|---|---|---|---|---|
| 110 °C Rheology | Zero-shear Viscosity (Pa-s) | NM | NM | NM | NM | 9,905,301 | NM | 5,165 |
| | Cross Exponent | NM | NM | NM | NM | 0.598 | NM | 0.602 |
| | G" @ 0.1 rad/s (Pa) | NM | NM | NM | NM | 146,991 | 83,790 | 501 |
| | G" @ 100 rad/s (Pa) | NM | NM | NM | NM | 815,425 | 1,795,180 | 91,890 |
| | tan(δ) @ 0.1 rad/s | NM | NM | NM | NM | 1.36 | 0.998 | 6.55 |
| | tan(δ) @ 100 rad/s | NM | NM | NM | NM | 0.151 | 0.442 | 1.47 |
| | Polymer Flow Temperature (°C) | NM | NM | NM | NM | 165.8 | NM | 110.3 |

**Table 14A. Reagents and Reaction Conditions for Examples 63-68**

| Synthetic Conditions | | E63 | E64 | E65 | E66 | E67 | E68 |
|---|---|---|---|---|---|---|---|
| Monomer, wt% | n-BA | - | - | - | - | 41.5 | - |
| | LMA | - | - | - | 31.6 | - | - |
| | HPMA | 9.6 | 9.6 | 9.6 | - | - | 9.3 |
| | MAA | - | - | - | 13.3 | 34.8 | |
| | n-BMA | 47.2 | 47.2 | 47.2 | 48.5 | 11.5 | 45.6 |
| | t-BMA | - | - | - | - | - | - |
| | MMA | 13.3 | 13.3 | 13.3 | - | - | 12.9 |
| | BzMA | 23.4 | 23.4 | 23.4 | - | - | 22.6 |
| Crosslinker | Name | P2000 | P2000 | P2000 | P3000 | P3000 | P3000 |
| | wt% | 6.6 | 6.6 | 6.6 | 6.6 | 12.1 | 9.6 |
| | Molar ratio [Crosslinker]/[Initiator] | 0.500 | 0.500 | 0.500 | 0.355 | 0.500 | 0.500 |
| Polymer | Total wt% | 100.0 | 100.0 | 100.0 | 100.0 | 100.0 | 100.0 |
| Initiator | ID | B | A | A | A | A | A |
| | Molar ratio [Monomer]/[Initiator] | 100 | 100 | 100 | 100 | 100 | 100 |
| Chain Transfer Agent (CTA) | Molar ratio [CTA]/[Initiator] | 3.000 | 1.680 | 1.680 | 1.680 | 1.680 | 1.680 |
| Reaction Solvent wt% | Toluene | 50 | 60 | 60 | 19 | 18 | 60 |
| | 2-butanol | - | - | - | 41 | 42 | - |
| Reaction Conditions | Reaction Concentration (wt%) | 50 | 40 | 40 | 40 | 40 | 40 |
| | Reaction Process ID | 9 | 5 | 12 | 12 | 12 | 12 |
| | Process Class | C | D | F | F | F | F |
| | Reaction Gelled | No | Yes | No | No | No | No |

**Table 14B. Characterizations of the Polymer Product Examples 63-68**

| Molecular Characterization | | E63 | E64 | E65 | E66 | E67 | E68 |
|---|---|---|---|---|---|---|---|
| **GPC** | Mn (kg/mol) | 18 | NM | 31 | 15 | 8 | 18 |
| | Mw (kg/mol) | 62 | NM | 114 | 30 | 20 | 88 |
| | Mz (kg/mol) | 165 | NM | 329 | 53 | 42 | 302 |
| | PDI | 3.4 | NM | 3.7 | 2.0 | 2.5 | 4.9 |
| **$^1$H NMR** | Conversion (%) | 99.4 | NM | 77.4 | 88.5 | 97.3 | 94.1 |
| | Final Concentration (wt%) | 49.7 | NM | 30.9 | 35.4 | 38.9 | 37.6 |
| **Calculated** | Weight Average Monomer Solubility Parameter ($MPa^{1/2}$) | 19.0 | 19.0 | 19.0 | 18.7 | 21.3 | 19.0 |
| | Flory-Fox Monomer Glass Transition Temperature, $T_g$ (°C) | 43.5 | 43.5 | 43.5 | -1.4 | 22.3 | 43.5 |
| | Flory-Fox Polymer Glass Transition Temperature, $T_g$ (°C) | 34.6 | 34.6 | 34.6 | -4.9 | 11.9 | 31.9 |
| **20 °C Rheology** | Zero-shear Viscosity (Pa-s) | NM | NM | NM | NM | NM | NM |
| | Cross Exponent | NM | NM | NM | NM | NM | NM |
| | G" @ 0.1 rad/s (Pa) | NM | NM | NM | NM | NM | NM |
| | G" @ 100 rad/s (Pa) | NM | NM | NM | NM | NM | NM |
| | tan(δ) @ 0.1 rad/s | NM | NM | NM | NM | NM | NM |
| | tan(δ) @ 100 rad/s | NM | NM | NM | NM | NM | NM |
| **110 °C Rheology** | Zero-shear Viscosity (Pa-s) | 4559 | NM | 75,751 | 27,290 | 1,654,570 | 39,096 |
| | Cross Exponent | 0.576 | NM | 0.464 | 0.549 | 0.580 | 0.465 |
| | G" @ 0.1 rad/s (Pa) | 451 | NM | 4,507 | 2,739 | 40,779 | 3,267 |
| | G" @ 100 rad/s (Pa) | 76864 | NM | 149,147 | 403,500 | 1,321,550 | 131,966 |
| | tan(δ) @ 0.1 rad/s | 7.31 | NM | 2.12 | 15.4 | 1.59 | 2.65 |
| | tan(δ) @ 100 rad/s | 1.42 | NM | 0.841 | 1.25 | 0.670 | 0.880 |
| | Polymer Flow Temperature (°C) | 53.7 | NM | 160.6 | 113.6 | 160.2 | 137.1 |

The data demonstrate the shear thinning impact by using the inventive polyolefinic crosslinkers. This effect is due at least in part to the dramatic increase in molecular weight of the crosslinked polyacrylates made using the polymeric crosslinker, with all other conditions held constant. Note that the 1,6-hexyl crosslinked polyacrylates also have directionally higher z-average molecular weight (Mz) than the polymer with no crosslinker, but shear thinning behavior still trends higher than for the inventive crosslinked polyacrylates of similar molecular weight (Mz), which is unexpected. See, for example, the comparisons in Figure 3 and Figure 4, showing bulk shear thinning performance (cross exponents) at equal molar ratios and using only LMA as the monofunctional acrylic monomer (Figure 3) and using a consistent composition of monofunctional acrylic monomers (Figure 4). In both Figures, the numbers above each bar are the measured molecular weights (Mz) in kDa.

The data in the tables further evinces the surprising effect of monofunctional acrylic monomer choice. Higher molecular weight is expected to increase shear thinning (decrease the cross exponent). However, Figure 5 demonstrates that, for examples using the same crosslinker type and amount, the molecular weight effect on the cross exponent is not obvious as differing monofunctional acrylic monomers are used (Mz values are displayed above each bar).

The crosslinked polyacrylates described herein can be used in many applications such as in binders, flow improvers, coatings, and adhesives to, for instance, improve processing properties and the properties of the final product.

All documents described herein are incorporated by reference herein, including any priority documents and/or testing procedures, to the extent they are not inconsistent with this text. As is apparent from the foregoing general

description and the specific embodiments, while forms of the invention have been illustrated and described, various modifications can be made without departing from the spirit and scope of the invention. Accordingly, it is not intended that the invention be limited thereby.

The term "comprising" is considered synonymous with the term "including." Likewise, whenever a composition, an element, or a group of elements is preceded with the transitional phrase "comprising", it is understood that we also contemplate the same composition or group of elements with transitional phrases "consisting essentially of", "consisting of", "selected from the group of consisting of", or "is" preceding the recitation of the composition, element, or elements and vice versa.

## Claims

1. Crosslinked polyacrylates comprising the reaction product of:

   one or more monofunctional acrylic monomers; and
   one or more polyolefinic crosslinkers having at least two reactive dienes and an Mn valueof greater than 1000 g/mole;
   wherein the crosslinked polyacrylates have an Mw of at least 30,000 g/mole.

2. The crosslinked polyacrylates of claim 1, wherein the polyolefinic crosslinker has a PDI of 2.2 or less, and an Mn value within a range from 1000 to 6000 g/mole, and wherein polar moieties are substantially absent from the polyolefinic crosslinker.

3. The crosslinked polyacrylates of claim 1-2, wherein polyolefinic crosslinker is a polybutadiene or polyfarnesene having at least two reactive dienes.

4. The crosslinked polyacrylates of claims 1-2, wherein the polyolefinic crosslinker is selected from the group consisting of the structures represented by:

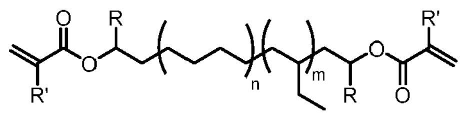

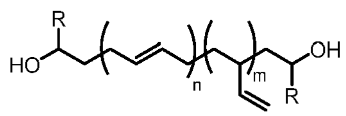

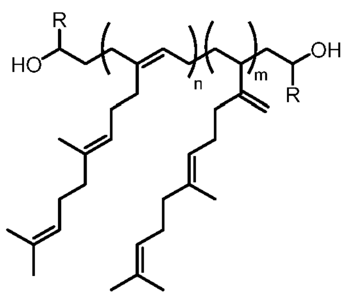

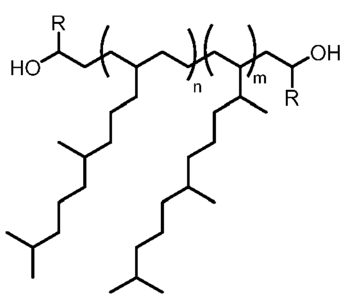

   and combinations thereof, wherein n and m are integers within a range from 0 to 40, wherein $n+m \geq 1$, and wherein any one or more of the hydroxyl groups in the structures may be esterified to form the acrylate analogue, and wherein R is a hydrocarbon radical and R' is hydrogen or methyl.

5. The crosslinked polyacrylates of claims 1-4, having an Mw of at least 50,000 g/mole and having an Mz of at least 50,000 g/mole.

6. The crosslinked polyacrylates of claims 1-5, wherein the one or more monofunctional acrylic monomers are selected

from structures represented by the formula $CH_2$=CR-C(O)X-R', wherein R is hydrogen or methyl, X independently is oxygen or a group of the formula NR", R' is hydrogen, or a linear, branched, or cyclic hydrocarbon radical, and R" is hydrogen or a linear, branched, or cyclic hydrocarbon radical.

**7.** The crosslinked polyacrylates of claims 1-6, wherein the one or more monofunctional acrylic monomers are selected from the group consisting of lauryl acrylate, n-butyl acrylate, benzyl acrylate, acrylic acid, lauryl methacrylate, hydroxypropyl methacrylate, 2-hydroxyethyl methacrylate, 2-hydroxyethyl acrylate, methacrylic acid, n-butyl methacrylate, t-butyl methacrylate, methyl methacrylate, cyclohexyl methacrylate, polybutadiene methacrylate, benzyl methacrylate, 2-phenoxyethyl methacrylate, and poly(ethylene glycol) methacrylate, and combinations thereof.

**8.** Crosslinked polyacrylates comprising at least two polyacrylates comprising one or more monofunctional acrylic monomer derived units, the at least two polyacrylates bound to one another by at least one polyolefinic crosslinker, wherein the at least one polyolefinic crosslinker has an Mn value of greater than 1000 g/mole, and wherein the crosslinked polyacrylates have an Mw of at least 30,000 g/mole.

**9.** The crosslinked polyacrylates of claim 8, wherein the polyolefinic crosslinker has a PDI of 2.2 or less and an Mn value within a range from 1000 to 6000 g/mole, and wherein polar moieties are substantially absent from the polyolefinic crosslinker.

**10.** The crosslinked polyacrylates of claims 8-9, wherein the polyolefinic crosslinker is selected from the group consisting of the structures represented by:

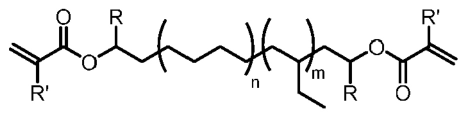

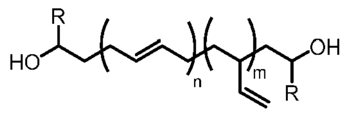

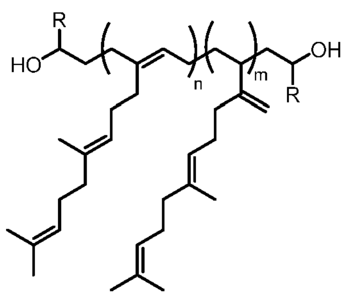

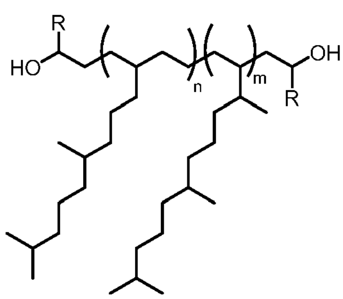

and combinations thereof, wherein n and m are integers within a range from 0 to 40, wherein n+m $\geq$ 1, and wherein any one or more of the hydroxyl groups in the structures may be esterified to form the acrylate analogue, and wherein R is a hydrocarbon radical and R' is hydrogen or methyl.

**11.** The crosslinked polyacrylates of claim 8-9, wherein the polyolefinic crosslinker comprises a polyolefin homopolymer or copolymer having at least two reactive dienes and is formed from olefin monomers selected from C2 to C50 olefins, wherein the homopolymer or copolymer is linear or branched, and wherein the branching may be Cl to C50 hydrocarbon branching.

**12.** The crosslinked polyacrylates of claims 8-11, wherein the one or more monofunctional acrylic monomer derived units are selected from radical structures represented by the formula:

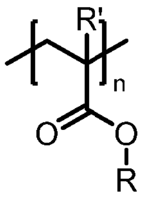

wherein R' is hydrogen or methyl, and R is hydrogen or a linear, branched, or cyclic hydrocarbon radical, and n is an integer from 10 to 10,000.

**13.** The crosslinked polyacrylates of claim 8-12, wherein the one or more monofunctional acrylic monomer derived units are selected from the group consisting of radicals of lauryl acrylate, n-butyl acrylate, benzyl acrylate, acrylic acid, lauryl methacrylate, hydroxypropyl methacrylate, 2-hydroxyethyl methacrylate, 2-hydroxyethyl acrylate, methacrylic acid, n-butyl methacrylate, t-butyl methacrylate, methyl methacrylate, cyclohexyl methacrylate, polybutadiene methacrylate, benzyl methacrylate, 2-phenoxyethyl methacrylate, and poly(ethylene glycol) methacrylate, and combinations thereof.

**14.** A method of forming crosslinked polyacrylates having an Mw of at least 30,000 g/mole comprising combining one or more monofunctional acrylic monomers with a polyolefinic crosslinker having at least two reactive dienes, wherein:

(a) the polyolefinic crosslinker is combined over time;
(b) both are combined simultaneously;
(c) the monofunctional acrylic monomers are combined over time, or
(d) both the monofunctional acrylic monomers and the polyolefinic crosslinker are combined over time with one another.

**15.** The method of claim 14, wherein the combining takes place at a temperature within a range of from 65 to 95 °C.

**16.** The method of claims 14-15, wherein the monomer or crosslinker are added continuously or in fractional portions over time within a range from 10 to 300 minutes.

**17.** The method of claims 14-16, further comprising combining an initiator, wherein the initiator is combined with the monofunctional acrylic monomers and polyolefinic crosslinker over time or combined simultaneously with the monofunctional acrylic monomers and polyolefinic crosslinker.

**18.** The method of claims 14-17, further comprising combining an initiator, wherein the combining takes place at a temperature such that the initiator half-life is within a range from 1 to 10 hours.

**19.** The method of claims 14-18, wherein the polyolefinic crosslinker is combined in an amount of 0.1 to 20 wt% by weight of the polyolefinic crosslinker and one or more monofunctional acrylic monomers.

**20.** The method of claims 14-19, wherein an additional step of curing or effecting crosslinking is absent.

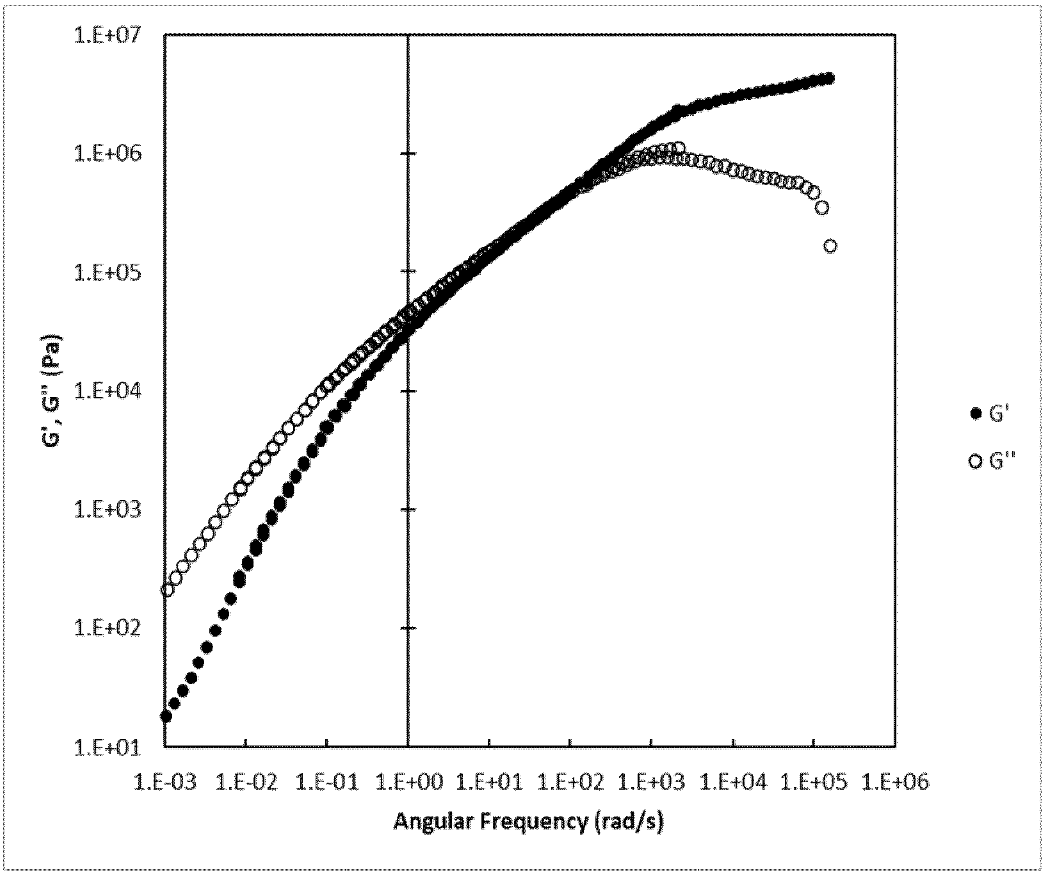
1.E+07
1.E+06
1.E+05
1.E+04
1.E+03
1.E+02
1.E+01
G', G'' (Pa)
1.E-03 1.E-02 1.E-01 1.E+00 1.E+01 1.E+02 1.E+03 1.E+04 1.E+05 1.E+06
Angular Frequency (rad/s)
G'
G''

FIG. 1

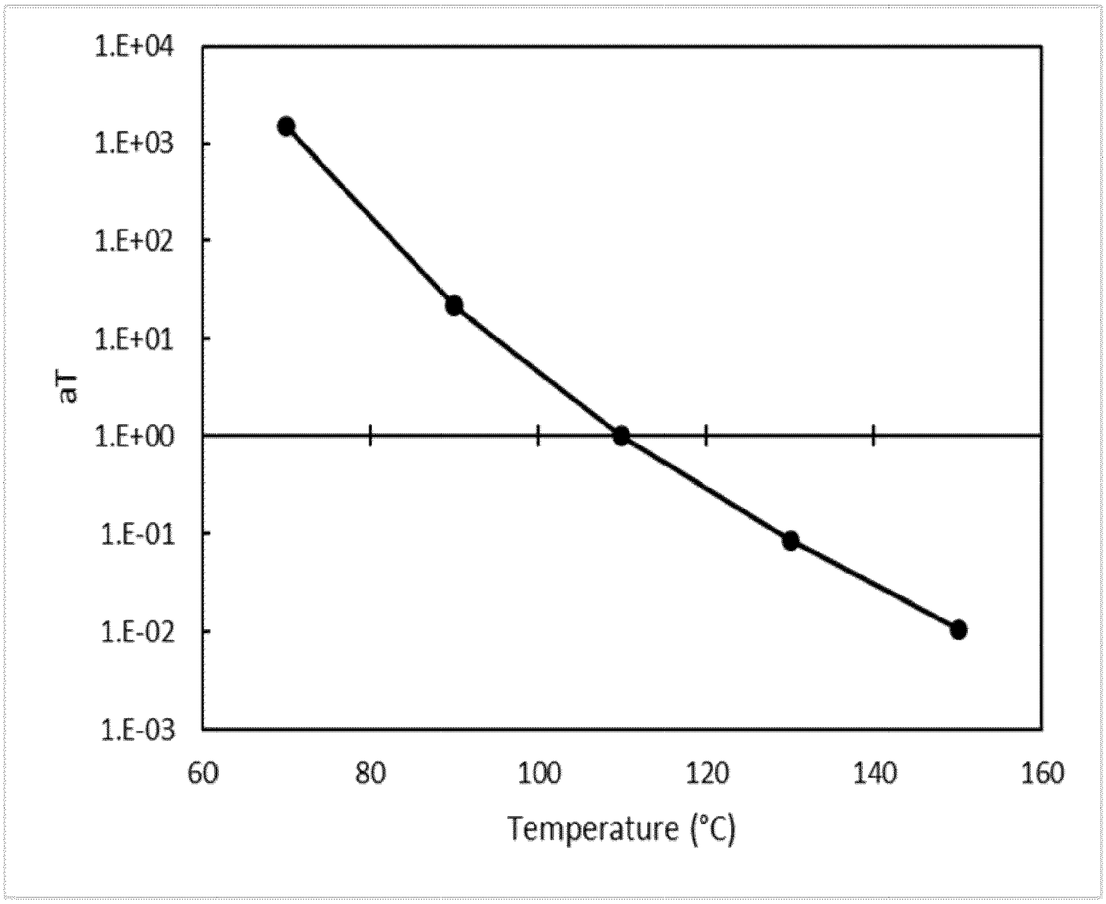
1.E+04
1.E+03
1.E+02
1.E+01
1.E+00
1.E-01
1.E-02
1.E-03
aT
60
80
100
120
140
160
Temperature (°C)

**FIG. 2**

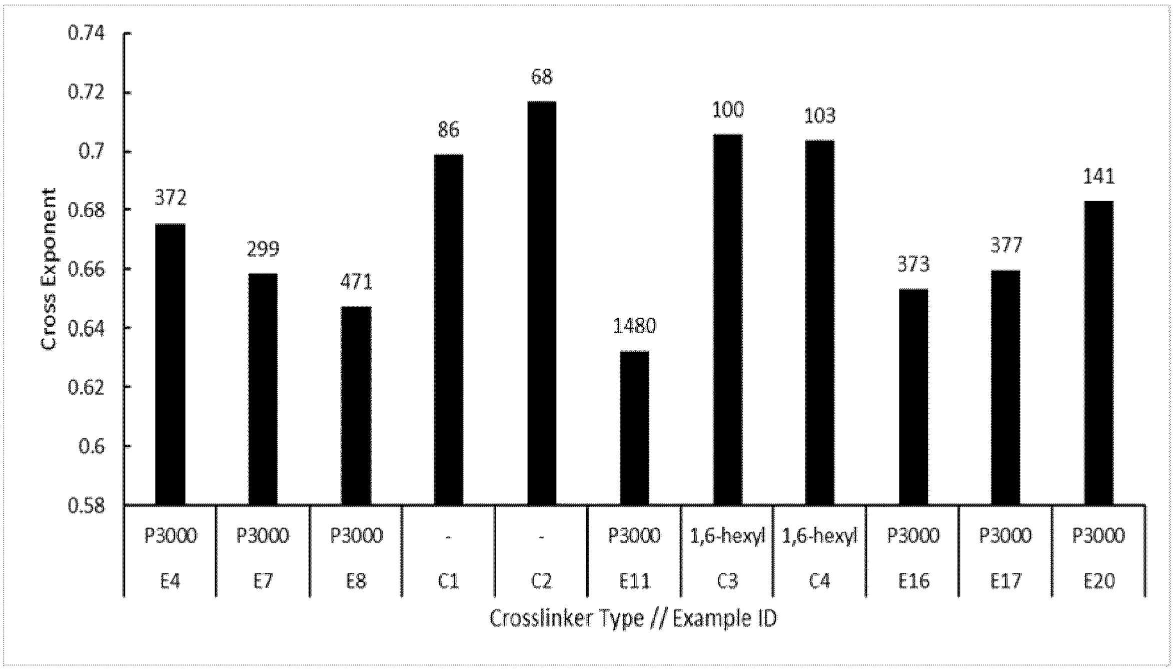
0.74
0.72
0.7
0.68
0.66
0.64
0.62
0.6
0.58
Cross Exponent
372
299
471
86
68
1480
100
103
373
377
141
P3000
E4
P3000
E7
P3000
E8
-
C1
-
C2
P3000
E11
1,6-hexyl
C3
1,6-hexyl
C4
P3000
E16
P3000
E17
P3000
E20
Crosslinker Type // Example ID

**FIG. 3**

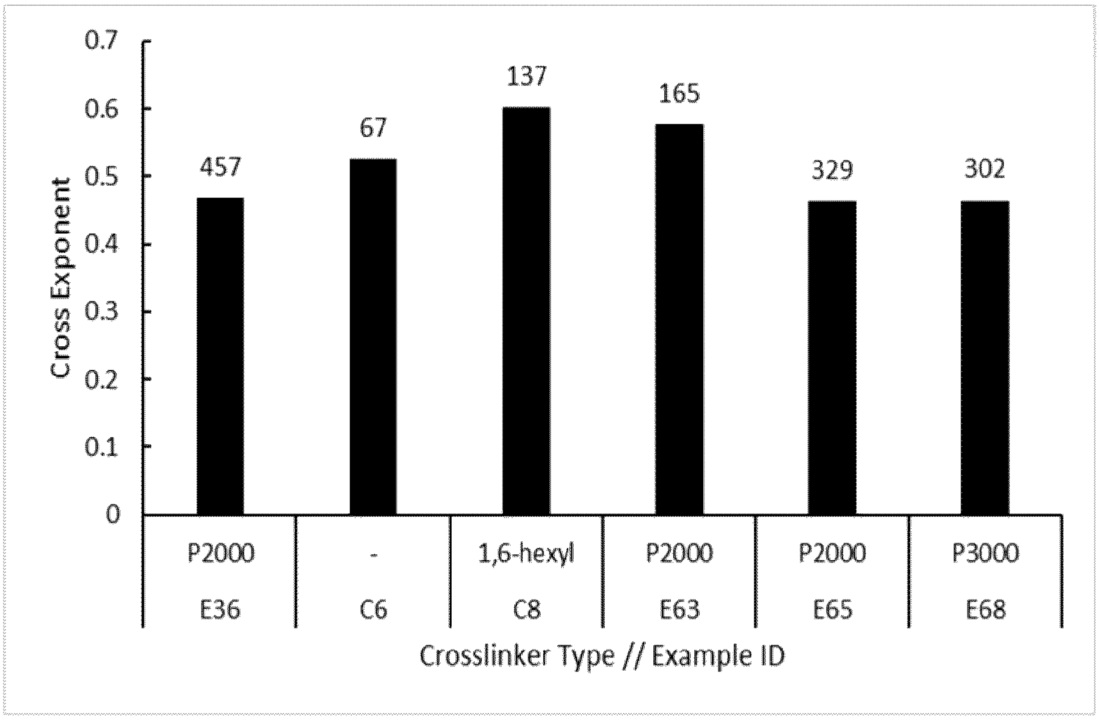
0.7
0.6
0.5
0.4
0.3
0.2
0.1
0
Cross Exponent
457
67
137
165
329
302
P2000
-
1,6-hexyl
P2000
P2000
P3000
E36
C6
C8
E63
E65
E68
Crosslinker Type // Example ID

**FIG. 4**

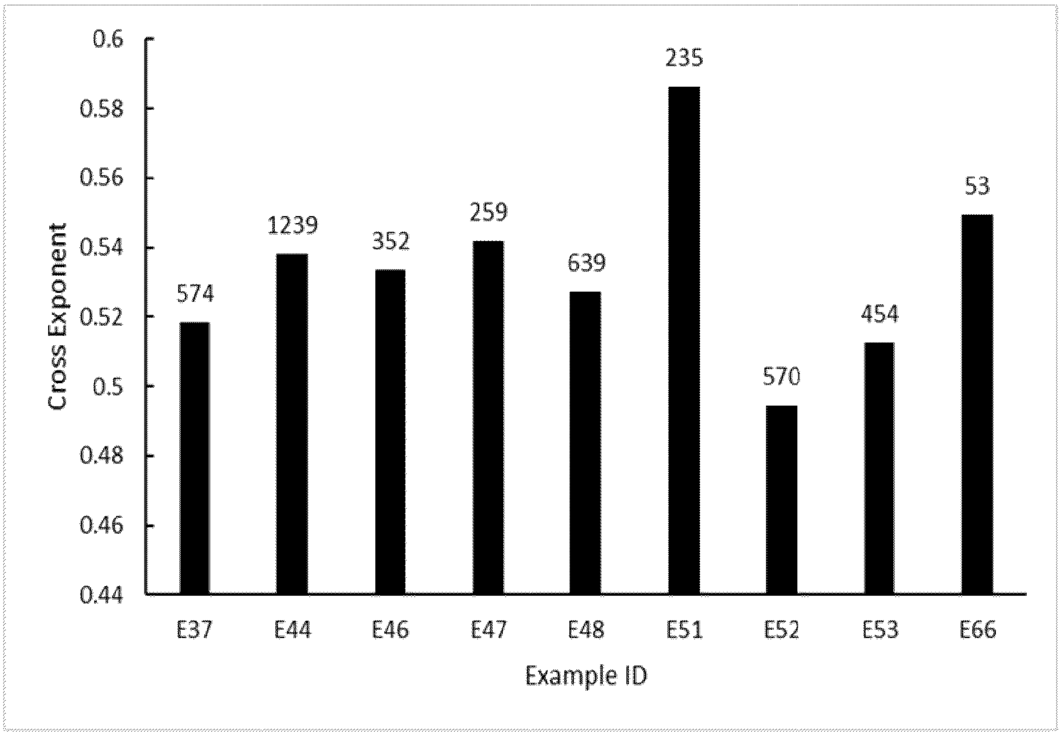
0.6
0.58
0.56
0.54
0.52
0.5
0.48
0.46
0.44
Cross Exponent
574
1239
352
259
639
235
570
454
53
E37
E44
E46
E47
E48
E51
E52
E53
E66
Example ID

FIG. 5

Europäisches Patentamt
European Patent Office
Office européen des brevets

# EUROPEAN SEARCH REPORT

Application Number
EP 24 22 0471

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 101 627 445 B1 (SHOWA DENKO KK [JP]) 3 June 2016 (2016-06-03)<br>* example 3; table 1 *<br>----- | 1,3,5-8, 11-14, 17,20 | INV. C08L33/08 |
| X | JP 2018 024764 A (KUSUMOTO CHEMICALS) 15 February 2018 (2018-02-15)<br>* example 24 *<br>----- | 1,3-8, 10-14, 17-20 | |
| X | WO 2019/071564 A1 (HENKEL AG & CO KGAA [DE]; ABLESTIK SHANGHAI LTD [CN]) 18 April 2019 (2019-04-18)<br>* example 2 *<br>----- | 1,3,5,6, 8,11,12, 14,20 | |
| X | JP H06 179849 A (MITSUBISHI RAYON CO) 28 June 1994 (1994-06-28)<br>* examples 1-5 *<br>----- | 1-3,5-9, 11-20 | |

TECHNICAL FIELDS SEARCHED (IPC)

C08L
C09J
B05D
C08F

The present search report has been drawn up for all claims

| Place of search | Date of completion of the search | Examiner |
|---|---|---|
| The Hague | 19 March 2025 | Jegou, Gwénaëlle |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 22 0471

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2025

| Patent document cited in search report | Publication date | Patent family member(s) | Publication date |
|---|---|---|---|
| KR 101627445 B1 | 03-06-2016 | CN 104093800 A | 08-10-2014 |
| | | JP 6031049 B2 | 24-11-2016 |
| | | JP WO2013115250 A1 | 11-05-2015 |
| | | KR 20140126725 A | 31-10-2014 |
| | | TW 201402752 A | 16-01-2014 |
| | | WO 2013115250 A1 | 08-08-2013 |
| JP 2018024764 A | 15-02-2018 | NONE | |
| WO 2019071564 A1 | 18-04-2019 | NONE | |
| JP H06179849 A | 28-06-1994 | JP 3523282 B2 | 26-04-2004 |
| | | JP H06179849 A | 28-06-1994 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20130273362 A1
- US 8110280 B
- US 7393901 B
- US 20060116476 A1
- US 10947423 B
- US 20210198533 A1
- US 10626300 B
- US 9803114 B
- JP 6986666 B
- JP 6338915 B
- US 20210130521 A1
- US 9447309 B
- US 9822286 B
- US 20170037282 A1
- US 9475967 B
- US 20140243493 A1
- US 9359528 B2
- US 9290682 B

### Non-patent literature cited in the description

- Ullmann's ENCYCLOPEDIA OF INDUSTRIAL CHEMISTRY. Wiley
- Physical Properties of Polymers Handbook. Springer, 2007